# EUROPÄISCHE PATENTANMELDUNG

(11) **EP 4 406 704 A2**
(43) Veröffentlichungstag der Anmeldung: **31.07.2024**
(21) Anmeldenummer: 24151502.2
(22) Anmeldetag: 12.01.2024
(51) Int. Cl.: B25F 5/00, G05B 23/02

(54) **VERFAHREN ZUM ERZEUGEN EINES TRAININGSDATENSATZES, VERFAHREN ZUM TRAINIEREN EINER KÜNSTLICHEN INTELLIGENZ, KÜNSTLICHE INTELLIGENZ UND HANDWERKZEUGMASCHINE**

(30) Priorität: 26.01.2023 DE 102023200602
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Frischen, Andreas, 71229 Leonberg (DE); Beseke, Lars, 70599 Stuttgart (DE); Doepner, Jan, 69120 Heidelberg (DE); Peter, Manuel, 76889 Schweigen-Rechtenbach (DE); Hegemann, Bernhard, 70794 Filderstadt (DE); Tadah Teguetio, Dimetric Armand, 70439 Stuttgart-Stammheim (DE)

(57) **Zusammenfassung**

Die Erfindung betrifft ein Verfahren (300) zum Erzeugen eines Trainingsdatensatzes für ein Training einer künstlichen Intelligenz (149) zum Ermitteln eines Betriebszustands (A, B, C) und/oder zum Vorhersagen eines Ereigniszeitpunkts (125, 126) einer Handwerkzeugmaschine (100), umfassend:
Bereitstellen (301) einer Mehrzahl von Messwerten (121) einer Betriebsgröße (119) einer Handwerkzeugmaschine (100);
Identifizieren (303) eines Ereigniszeitpunkts (125) innerhalb der Mehrzahl von Messwerten (121);
Anordnen (307) der Mehrzahl von gelabelten Messwerten (121) in einer Zeitreihe (123) basierend auf den Zeitstempeln der Messwerte; und Bereitstellen (309) eines die Zeitreihe (123) von gelabelten Messwerten (121) der Betriebsgröße (119) umfassenden Trainingsdatensatzes.

## Beschreibung

Die Erfindung betrifft ein Verfahren zum Erzeugen eines Trainingsdatensatzes für ein Training einer künstlichen Intelligenz. Die Erfindung betrifft zusätzlich ein Verfahren zum Trainieren einer künstlichen Intelligenz. Die Erfindung betrifft ferner eine künstliche Intelligenz für eine Steuerung einer Handwerkzeugmaschine, die eingerichtet ist, Betriebszustände der Handwerkzeugmaschine zu erkennen und/oder Ereigniszeitpunkte, in denen einen Übergang zwischen verschiedenen Betriebszuständen stattfindet, vorherzusagen. Die Erfindung betrifft zusätzlich eine Handwerkzeugmaschine.

### Stand der Technik

Aus dem Stand der Technik sind Verfahren zum Erzeugen von Trainingsdatensätzen zum Trainieren künstlicher Intelligenzen bekannt.

Es ist eine Aufgabe der Erfindung, ein verbessertes Verfahren zum Erzeugen eines Trainingsdatensatzes, ein Verfahren zum Trainieren einer künstlichen Intelligenz, eine künstliche Intelligenz und eine Handwerkzeugmaschine bereitzustellen.

Diese Aufgabe wird durch das Verfahren zum Erzeugen eines Trainingsdatensatzes, das Verfahren zum Trainieren einer künstlichen Intelligenz, die künstlichen Intelligenz und die Handwerkzeugmaschine der unabhängigen Ansprüche gelöst. Vorteilhafte Ausgestaltungen sind Gegenstand der untergeordneten Ansprüche.

Es wird ein Verfahren zum Steuern einer Handwerkzeugmaschine bereitgestellt, umfassend:
Empfangen von Sensordaten wenigstens einer Betriebsgröße der Handwerkzeugmaschine;
Empfangen eines auf einer Nutzereingabe eines Nutzers der Handwerkzeugmaschine basierenden Eingabewerts für einen Steuerungsparameter der Handwerkzeugmaschine;
Ermitteln eines ersten Zielwerts des Steuerungsparameters basierend auf den Sensordaten und dem Eingabewert;
Ausführen eines Zustandsbestimmungsmoduls und Anwenden des Zustandsbestimmungsmoduls auf die Sensordaten und Ermitteln eines Betriebszustands der Handwerkzeugmaschine; und
Steuern der Handwerkzeugmaschine basierend auf dem ersten Zielwert des Steuerungsparameters und dem ermittelten Betriebszustand.

Hierdurch kann der technische Vorteil erreicht werden, dass ein verbessertes Verfahren zum Steuern einer Handwerkzeugmaschine bereitgestellt werden kann, bei dem neben einer Nutzereingabe eines Nutzers der Handwerkzeugmaschine ferner ein während des Betriebs der Handwerkzeugmaschine ermittelter Betriebszustand bei der Steuerung der Handwerkzeugmaschine berücksichtigt wird. Hierzu wird basierend auf Sensordaten wenigstens einer Betriebsgröße der Handwerkzeugmaschine durch Ausführen eines Zustandsbestimmungsmoduls auf die Sensordaten ein Betriebszustand der Handwerkzeugmaschine ermittelt. Die Steuerung der Handwerkzeugmaschine wird nun unter Berücksichtigung des ermittelten Betriebszustands bewirkt. Gemäß verschiedenen Ausführungsformen kann die Steuerung der Handwerkzeugmaschine exakt auf den vorliegenden Betriebszustand angepasst werden. Hierbei kann die Steuerung auch unabhängig von der Nutzereingabe des Nutzers erfolgen. Beispielsweise kann die Nutzereingabe an den vorliegenden Betriebszustand angepasst werden, sodass eine dem Betriebszustand adäquate Steuerung der Handwerkzeugmaschine ermöglicht ist, selbst wenn die Eingabe des Nutzers eine andere nicht zum Betriebszustand passende Steuerung bewirken würde.

Nach einer Ausführungsform umfasst das Steuern der Handwerkzeugmaschine umfasst:
Ermitteln eines zweiten Zielwerts des Steuerungsparameters basierend auf dem ermittelten Betriebszustand der Handwerkzeugmaschine;
Ermitteln eines Ausgabezielwerts des Steuerungsparameters basierend auf dem ersten Zielwert und dem zweiten Zielwert; und
Ausgeben des Ausgabezielwerts an eine Aktorik der Handwerkzeugmaschine zum Steuern der Handwerkzeugmaschine.

Hierdurch kann der technische Vorteil erreicht werden, dass die Steuerung der Handwerkzeugmaschine exakt an den vorliegenden Betriebszustand angepasst wird. Hierzu wird die Steuerung der Handwerkzeugmaschine basierend auf ersten und zweiten Zielwerten eines Steuerungsparameters bewirkt. Der erste Zielwert basiert hierbei auf einer Nutzereingabe des Nutzers der Handwerkzeugmaschine. Der zweite Zielwert wird hingegen unter Berücksichtigung des ermittelten Betriebszustands der Handwerkzeugmaschine ermittelt. Unter Berücksichtigung der ersten und zweiten Zielwerte des Steuerungsparameters wird daraufhin ein Ausgabezielwert des Steuerungsparameters ermittelt, der abschließend zur Steuerung der Handwerkzeugmaschine an die Aktorik der Handwerkzeugmaschine ausgegeben wird.

Durch die Berücksichtigung der ersten und zweiten Zielwerte kann somit für die Ermittlung des Ausgabezielwerts sowohl die Nutzereingabe durch den Nutzer als auch der jeweils vorliegende Betriebszustand der Handwerkzeugmaschine für die Steuerung der Handwerkzeugmaschine berücksichtigt werden. Dies hat den Vorteil, dass insbesondere für Fälle, in denen die Nutzereingabe durch den Nutzer, die beispielsweise durch Betätigung eines Auslöseschalters erfolgt, für den jeweils vorliegenden Betriebszustand der Handwerkzeugmaschine keine optimale Steuerung der Handwerkzeugmaschine zulässt, durch Berücksichtigung des an den vorliegenden Betriebszustand angepassten zweiten Zielwert, die Steuerung trotz der unpassenden Nutzereingabe dennoch an den vorliegenden Betriebszustand angepasst werden kann.

Durch die Berücksichtigung des auf der Nutzereingabe basierenden ersten Zielwerts bleibt die Steuerung der Handwerkzeugmaschine trotzdem weiterhin primär in der Hand des Nutzers. Nur für bestimmte Betriebszustände kann in Gestalt des Ausgabezielwerts, in dem der zweite Zielwert berücksichtigt wird, die Nutzereingabe überschrieben beziehungsweise besser an den vorliegenden Betriebszustand angepasst werden. Das Verfahren ermöglicht somit eine an den jeweils vorliegenden Betriebszustand der Handwerkzeugmaschine angepasste Steuerung der Handwerkzeugmaschine, die neben den Nutzereingaben an die jeweils vorliegenden Betriebszustände der Handwerkzeugmaschine angepasste Zielwerte eines Steuerungsparameters berücksichtigt.

Ein Zielwert ist im Sinne der Anmeldung ein Soll-Wert des Steuerungsparameters.

Nach einer Ausführungsform umfasst das Ermitteln des Ausgabezielwerts:
Definieren des Ausgabezielwerts als einen Minimalwert oder einen Maximalwert der ersten und zweiten Zielwerte und/oder
Definieren des Ausgabezielwerts als ein Produkt aus den ersten und zweiten Zielwerten.

Hierdurch kann der technische Vorteil erreicht werden, dass ein möglichst präziser Ausgabezielwert des Steuerungsparameters ermittelt wird durch die Definition des Ausgabezielwerts als Minimalwert oder Maximalwert zwischen den ersten und zweiten Zielwerten kann eine möglichst einfache Ermittlung des Ausgabezielwerts erreicht werden. Je nach ermitteltem Betriebszustand der Handwerkzeugmaschine und je nach Art des Steuerungsparameters kann durch den gewählten Minimalwert oder Maximalwert zwischen den ersten und zweiten Zielwerten des Steuerungsparameters ein auf den jeweils ermittelten Betriebszustand optimal angepasster Ausgabezielwert des Steuerungsparameters ermittelt werden. Dies ermöglicht eine möglichst präzise auf den jeweils vorliegenden Betriebszustand angepasste Steuerung der Handwerkzeugmaschine.

Der Steuerungsparameter kann beispielsweise eine Drehzahl bzw. ein Drehmoment eines Motors der Handwerkzeugmaschine sein. Der Betriebszustand der Handwerkzeugmaschine kann beispielsweise einen Arbeitsfortschritt der Handwerkzeugmaschine beschreiben. Ist beispielsweise die Handwerkzeugmaschine als ein Elektroschrauber ausgebildet, so kann ein Betriebszustand der Handwerkzeugmaschine beschreiben, dass die jeweils zu verschraubende Schraube bereits formschlüssig in das jeweilige Werkstück eingeschraubt ist.

Die durch die Nutzereingabe des Nutzers durch Betätigung des Auslöseschalters der Handwerkzeugmaschine eingegebene Solldrehzahl bzw. das eingegebene Solldrehmoment des Motors kann für einen derartigen vorliegenden Formschluss der einzuschraubenden Schraube zu hoch sein, so dass unter Berücksichtigung des jeweils ermittelten Betriebszustands berechneten zweiten Ausgabezielwerts in Form einer entsprechend geringeren Motordrehzahl bzw. eines entsprechend geringeren Motordrehmoments, der Ausgabezielwert des Steuerungsparameters eine gegenüber der Nutzereingabe reduzierte Drehzahl bzw. ein gegenüber der Nutzereingabe reduziertes Drehmoment des Motors der Handwerkzeugmaschine beschreibt. Über den Ausgabezielwert kann somit eine an den jeweils vorliegenden Betriebszustand optimal angepasste Steuerung der Handwerkzeugmaschine erreicht werden.

Durch Definition des Ausgabezielwerts als Maxmalwert oder Minimalwerte der ersten und zweiten Zielwerte kann der jeweils am besten zu dem vorliegenden Betriebszustand passende Zielwert als Ausgabezielwert ausgewählt werden. Insbesondere kann der Zielwert gegenüber dem Eingabeparameter auf einen für den aktuellen Betriebszustand passenden Wertebereich begrenzt werden.

Durch die Multiplikation der ersten und zweiten Zielwerte kann der zweite Zielwert als Sensitivität in Bezug auf den ersten Zielwert fungieren. Durch den zweiten Zielwert kann somit der erste Zielwert, der auf der Nutzereingabe des Nutzers basiert, in Bezug auf den jeweils vorliegenden Betriebszustand durch einen Faktor in Form des zweiten Zielwerts entsprechend erhöht oder erniedrigt werden. Die Nutzereingabe und die darauf basierende Steuerung der Handwerkzeugmaschine durch den Nutzer kann somit effizient an den jeweils vorliegenden Betriebszustand angepasst werden.

Nach einer Ausführungsform umfasst das Ermitteln des Ausgabezielwerts: Definieren des Ausgabezielwerts als den ersten Zielwert, falls der zweite Zielwert kleiner als ein vordefinierter Schwellenwert ist, und Definieren des Ausgabezielwerts als einen vordefinierten Zielwert, falls der zweite Zielwert größer oder gleich dem vordefinierten Schwellenwert ist.

Hierdurch kann der technische Vorteil erreicht werden, dass ein wiederum präzisierter Ausgabezielwert bereitgestellt werden kann, der optimal an den jeweils vorliegenden Betriebszustand der Handwerkzeugmaschine angepasst ist. Hierzu wird entweder der auf der Nutzereingabe des Nutzers basierende erste Zielwert oder ein vordefinierter Zielwert als Ausgabezielwert verwendet, in Abhängigkeit des zweiten Zielwerts in Bezug auf einen vordefinierten Schwellenwert.

Die Berücksichtigung des vordefinierten Schwellenwerts ermöglicht eine einfache und präzise Anpassung des Ausgabezielwerts an den jeweils vorliegenden Betriebszustand. Je nach Art des jeweils vorliegenden Betriebszustands kann der vordefinierte Zielwert wie auch der vordefinierte Schwellenwert des Steuerungsparameters derart angepasst sein, dass der jeweils resultierende Ausgabezielwert eine optimale Steuerung der Handwerkzeugmaschine ermöglicht.

Der basierend auf dem jeweils ermittelten Betriebszustand ermittelte zweite Wert des Steuerungsparameters kann somit als Schaltwert für den ersten Zielwert der Nutzereingabe fungieren. Je nach Beurteilung des zweiten Zielwerts in Bezug auf den vordefinierten Schwellenwert wird zwischen dem ersten Zielwert der Nutzereingabe und dem vordefinierten Zielwert als Ausgabezielwert verschaltet.

Nach einer Ausführungsform umfasst das Ermitteln des Ausgabezielwerts: Definieren des Ausgabezielwerts als ein Produkt aus dem ersten Zielwert mit einem ersten vordefinierten Zielwert, falls der zweite Zielwert kleiner als ein vordefinierter Schwellenwert ist, und Definieren des Ausgabezielwerts als ein Produkt aus dem ersten Zielwert mit einem zweiten vordefinierten Zielwert, falls der zweite Zielwert größer oder gleich dem vordefinierten Schwellenwert ist.

Hierdurch kann der technische Vorteil erreicht werden, dass ein Wiederum präzisierter Ausgabezielwert bereitgestellt werden kann. In Abhängigkeit des in Bezug auf den ermittelten Betriebszustand ermittelten zweiten Zielwerts auf einen vordefinierten Schwellenwert wird der Ausgabezielwert als ein Produkt aus dem auf der Nutzereingabe basierenden ersten Zielwert mit einem ersten vordefinierten Zielwert oder einem zweiten vordefinierten Zielwert definiert. Die ersten und zweiten vordefinierten Zielwerte können hierbei als konstante Zielwerte ausgebildet sein.

Wie in der vorherigen Ausführungsform können die vordefinierten Zielwerte wie auch der vordefinierte Schwellenwert jeweils an den vorliegenden Betriebszustand angepasst sein. Die ersten und zweiten vordefinierten Zielwerte dienen hierbei wiederum als Sensitivitätswerte, die durch die Multiplikation mit dem ersten Zielwert, den ersten Zielwert jeweils erhöhen oder erniedrigen und hierüber an den jeweils vorliegenden Betriebszustand anpassen.

Der in Bezug auf den Betriebszustand ermittelte zweite Zielwert dient hierbei wiederum als Schaltwert, indem in Bezug auf den jeweils vordefinierten Schwellenwert durch den zweiten Zielwert zwischen dem Produkt des ersten Zielwerts mit dem ersten vordefinierten Zielwert und dem Produkt des ersten Zielwerts mit dem zweiten vordefinierten Zielwert verschaltet wird. Dies ermöglicht eine möglichst präzise Anpassung des Ausgabezielwerts an den jeweils ermittelten Betriebszustand.

Nach einer Ausführungsform umfasst das Ermitteln des Betriebszustands: Vorhersagen eines Ereigniszeitpunkts, wobei am Ereigniszeitpunkt ein Übergang der Handwerkzeugmaschine von einem Betriebszustand in einen weiteren Betriebszustand erfolgt.

Hierdurch kann der technische Vorteil erreicht werden, dass neben dem tatsächlichen Ermitteln eines bereits vorliegenden Betriebszustands zusätzlich oder alternativ durch das Zustandsbestimmungsmodul ein Ereigniszeitpunkt vorhergesagt werden kann, der einen Übergang zwischen verschiedenen Betriebszuständen der Handwerkzeugmaschine definiert. Durch das Vorhersagen des Ereigniszeitpunkts kann somit die Steuerung der Handwerkzeugmaschine auf einen bevorstehenden Übergang in einen weiteren Betriebszustand angepasst werden. Dies ermöglicht eine möglichst präzise Steuerung der Handwerkzeugmaschine, indem die Steuerung bereits auf noch nicht eingetretene Ereignisse bzw. Betriebszustände angepasst werden kann, in die die Handwerkzeugmaschine erst in Zukunft eintreten wird.

Nach einer Ausführungsform umfasst der Steuerungsparameter eines oder mehrere aus der Liste: Motordrehzahl, Motorstrom, Motorleistung eines Motors der Handwerkzeugmaschine.

Hierdurch kann der technische Vorteil erreicht werden, dass eine präzise Steuerung der Handwerkzeugmaschine unter Berücksichtigung der Ausgabezielwerte des Steuerungsparameters ermöglicht ist. Die Motordrehzahl, der Motorstrom bzw. die Motorleistung des Motors der Handwerkzeugmaschine stellen hierbei zuverlässige Steuerungsparameter dar, auf denen basierend eine Steuerung der Handwerkzeugmaschine ermöglicht ist.

Nach einer Ausführungsform umfasst die Betriebsgröße eines oder mehrere aus der Liste: Motorstrom, Motor-Positionswinkel, Motor-Drehgeschwindigkeit, Spannung einer Spannungsquelle der Handwerkzeugmaschine, Bewegungen und/oder Vibrationen der Handwerkzeugmaschine oder in der Handwerkzeugmaschine.

Hierdurch kann der technische Vorteil erreicht werden, dass die Betriebsgröße eine sinnvolle Messgröße zur Bestimmung des Betriebszustands bereitstellt. Durch Messungen des Motorstroms, der Motorpositionswinkel, der Motordrehgeschwindigkeit, einer Betriebsspannung einer Spannungsquelle der Handwerkzeugmaschine oder Bewegungen und/oder Vibration der Handwerkzeugmaschine oder in der Handwerkzeugmaschine können aussagekräftige Informationen erhalten werden, auf denen ein Betriebszustand der Handwerkzeugmaschine ermittelt werden kann.

Beispielsweise kann in dem oberen Beispiel durch Messungen des Motorstroms erkannt werden, ob eine einzuschraubende Schraube bereits formschlüssig in das jeweils zu bearbeitende Werkstück eingeschraubt ist. Beim Erreichen des Formschlusses sind Änderungen des Motorstroms wie auch der Motordrehgeschwindigkeit bzw. der Motordrehzahl zu erkennen, so dass hierauf eine präzise Ermittlung des Betriebszustands ermöglicht ist. Beispielsweise kann auch anhand der Bewegungssignale erkannt werden, ob die Handwerkzeugmaschine, beispielsweise der Schrauber, zum nächsten Arbeitsort bewegt wurde, und somit die vorherige Arbeitsphase, sprich der vorherige Schraubvorgang, abgeschlossen wurde. Dies ermöglicht ein zeitlich passendes Zurücksetzen des Betriebszustands, entsprechend der dann neuen Arbeitsphase, sprich des dann neuen Schraubvorgangs.

Nach einer Ausführungsform umfasst der Betriebszustand eines oder mehrere aus der Liste: einen Lastbereich, in dem die Handwerkzeugmaschine betrieben wird, eine Stärke von Vibrationen in der Handwerkzeugmaschine und/oder an einem bearbeiteten Werkstück und/oder im Nutzer der Handwerkzeugmaschine, eine Temperatur in der Handwerkzeugmaschine und/oder am Werkstück, Betriebsmodus, in dem die Handwerkzeugmaschine betrieben wird, einen Arbeitsfortschritt der Handwerkzeugmaschine, Material des Werkstücks, eine Existenz eines Formschlusses zwischen der Handwerkzeugmaschine und dem Werkstück.

Hierdurch kann der technische Vorteil erreicht werden, dass verschiedene Betriebszustände, in denen sich die Handwerkzeugmaschine befinden kann bzw. in die die Handwerkzeugmaschine eintreten kann, bei der Steuerung der Handwerkzeugmaschine in Form des zweiten Zielwerts des Steuerungsparameters berücksichtigt werden können. Durch das erfindungsgemäße Verfahren können somit verschiedenste Betriebszustände berücksichtigt werden, wodurch ein breit einsetzbares Steuerungsverfahren bereitgestellt werden kann.

Nach einer Ausführungsform umfasst das Zustandsermittlungsmodul eine trainierte künstliche Intelligenz, die darauf trainiert ist, basierend auf den Sensordaten der Betriebsgröße den Betriebszustand der Handwerkzeugmaschine zu ermitteln und/oder den Ereigniszeitpunkt vorherzusagen.

Hierdurch kann der technische Vorteil erreicht werden, dass ein möglichst zuverlässiges und leistungsfähiges Zustandsermittlungsmodul bereitgestellt werden kann, das eingerichtet ist, vorliegende Betriebszustände zu erkennen bzw. zukünftige Ereigniszeitpunkte vorherzusagen.

Nach einem Aspekt wird ein Verfahren zum Erzeugen eines Trainingsdatensatzes für ein Training einer künstlichen Intelligenz zum Ermitteln eines Betriebszustands und/oder zum Vorhersagen eines Ereigniszeitpunkts einer Handwerkzeugmaschine bereitgestellt, wobei das Verfahren umfasst:
Bereitstellen einer Mehrzahl von Messwerten einer Betriebsgröße einer Handwerkzeugmaschine, wobei die Messwerte jeweils mit Zeitstempeln versehen sind;
Identifizieren eines Ereigniszeitpunkts innerhalb der Mehrzahl von Messwerten, wobei der Ereigniszeitpunkt einen Zeitpunkt definiert, an dem die Handwerkzeugmaschine von einem ersten Betriebszustand in einen zweiten Betriebszustand übergeht;
Versehen der Messwerte mit Labelwerten, die geeigneten sind, zu kennzeichnen, ob ein jeweiliger Messwert dem Ereigniszeitpunkt und/oder dem Ereigniszeitbereich zugeordnet ist;
Anordnen der Mehrzahl von gelabelten Messwerten in einer Zeitreihe basierend auf den Zeitstempeln der Messwerte; und
Bereitstellen eines die Zeitreihe von gelabelten Messwerten der Betriebsgröße umfassenden Trainingsdatensatzes.

Hierdurch kann der technische Vorteil erreicht werden, dass ein verbessertes Verfahren zum Erzeugen eines Trainingsdatensatzes für ein Training einer künstlichen Intelligenz zum Ermitteln eines Betriebszustands und/oder zum Vorhersagen eines Ereigniszeitpunkts einer Handwerkzeugmaschine bereitgestellt werden kann. Entsprechend kann ein verbesserter Trainingsdatensatz bereitgestellt werden, der optimal auf das Training einer künstlichen Intelligenz zum Ermitteln eines Betriebszustands bzw. Vorhersagen von Ereigniszeitpunkten im Sinne des Verfahrens zum Steuern einer Handwerkzeugmaschine gemäß den voranstehenden Ausführungsformen angepasst ist.

Hierzu werden zunächst Messwerte einer Betriebsgröße der Handwerkzeugmaschine bereitgestellt, wobei die Messwerte jeweils mit Zeitstempeln versehen sind. Die Messwerte können auf einer Mehrzahl von Messungen der Betriebsgröße der Handwerkzeugmaschine oder einer Mehrzahl von vergleichbaren Handwerkzeugmaschinen basieren. Die entsprechenden Messwerte können beispielsweise während des Betriebs der Handwerkzeugmaschine oder während des Betriebs der Mehrzahl von Handwerkzeugmaschinen aufgenommen werden und als entsprechende Messung von Messwerten für das Verfahren zum Erzeugen des Trainingsdatensatzes bereitgestellt werden. Die Messwerte der Betriebsgröße, die während des Betriebs der Handwerkzeugmaschinen aufgenommen wurden, können beispielsweise in eine dafür vorgesehene Serverarchitektur übertragen werden, die eingerichtet ist, die entsprechenden Messsätze für das Verfahren zum Erzeugen des Trainingsdatensatzes bereitzustellen.

Ferner wird basierend auf den Zeitstempeln, die einen Zeitpunkt definieren, zu dem die jeweiligen Messwerte aufgenommen wurden, innerhalb der Mehrzahl von Messwerten ein Ereigniszeitpunkt als Zeitpunkt identifiziert, an dem die Handwerkzeugmaschine von einem ersten in einen zweiten Betriebszustand übergeht. Ferner werden die Messwerte mit Labelwerten versehen, die den jeweiligen Ereigniszeitpunkt kennzeichnen. Darüber hinaus wird die Mehrzahl von gelabelten Messwerten in einer Zeitreihe angeordnet und die Zeitreihe der gelabelten Messwerte wird als entsprechender Trainingsdatensatz bereitgestellt.

Basierend auf einem derart generierten Trainingsdatensatz, in dem die gelabelten Messwerte der Betriebsgröße bzgl. ihrer Zeitstempel in eine entsprechende Zeitreihe angeordnet sind, kann ein optimiertes Training einer künstlichen Intelligenz zum Ermitteln eines Betriebszustands bzw. zum Vorhersagen eines Ereigniszeitpunkts durchgeführt werden. Die jeweiligen Label der Messwerte der Betriebsgröße erlauben hierbei eine Beurteilung, ob zum Zeitpunkt des jeweiligen Messwerts die Handwerkzeugmaschine in einem ersten oder in einem zweiten Betriebszustand vorgelegen hat.

Ferner erlaubt wenigstens ein Label des Messwerts die exakte Bestimmung eines Ereigniszeitpunkts, an dem der Übergang zwischen den zwei Betriebszuständen vorliegt. Das Versehen der Messwerte mit Labelwerten entspricht hierbei dem aus dem Stand der Technik bekannten Labeln von Messwerten, in dem einem jedem Messwert der Betriebsgröße das entsprechende Label als Kennzeichnung zugewiesen wird.

Nach einer Ausführungsform umfasst das Verfahren ferner:
Ermitteln eines Drehwinkels eines Motors der Handwerkzeugmaschine für jeden Messwert der Betriebsgröße; und
Berechnen eines Rotationszeitpunkts für jeden Messwert der Betriebsgröße unter Berücksichtigung einer zur Ausführung einer vollständigen Umdrehung des Motors benötigten Zeitspanne und der Zeitstempel, wobei der Rotationszeitpunkt einen Zeitpunkt definiert, an dem für einen Messwert ausgehend von dem jeweiligen Zeitstempel eine komplette Umdrehung des Motors abgeschlossen ist.

Hierdurch kann der technische Vorteil erreicht werden, dass eine weitere Verbesserung des Trainingsdatensatzes erreicht wird. Wird für jeden Messwert der Betriebsgröße ein Drehwinkel des Motors der Handwerkzeugmaschine, der zum Zeitpunkt der Aufnahme des Messwerts der Betriebsgröße vorlag, ermittelt. Ferner wird für jeden Messwert der Betriebsgröße ein Rotationszeitpunkt berechnet, wobei der Rotationszeitpunkt einen Zeitpunkt beschreibt, an dem ausgehend von dem jeweiligen Drehwinkel des jeweiligen Messwerts der Betriebsgröße eine vollständige Umdrehung ausgeführt hat. Durch das Vorliegen von sowohl Zeitstempeln als auch Drehwinkeln, können alle anderen Sensorsignale/-größen wahlweise auf die Zeit oder den Drehwinkel bezogen werden. Dies verbessert den Datensatz, da Zustände und Ereignisse sowohl im zeitlichen Verlauf als auch im Verlauf des Drehwinkel-Fortschritts vorliegen und ausgewertet werden können.

Basierend auf dem für den jeden Messwert zugeordneten Drehwinkel bzw. Rotationszeitpunkt kann eine präzise Vorhersage des Ereigniszeitpunkts getätigt werden. Indem für jeden Messwert der Betriebsgröße mit entsprechendem Zeitstempel der Rotationszeitpunkt bekannt ist, an dem der Motor der Handwerkzeugmaschine eine weitere vollständige Umdrehung ausgeführt hat, kann unter Berücksichtigung der Anzahl von Motordrehungen, die zum Erreichen des Übergangs in den zweiten Betriebszustand ausgeführt werden müssen, für jeden Messwert der Betriebsgröße und den jeweils dazugehörigen Zeitstempel der Ereigniszeitpunkt präzise vorhergesagt werden. Dies ermöglicht ein optimales Training der künstlichen Intelligenz.

Nach einer Ausführungsform umfasst das Identifizieren des Ereigniszeitpunkts:
Empfangen von Sensordaten, die den Betriebszustand der Handwerkzeugmaschine abbilden;
Ermitteln des Ereigniszeitpunkts innerhalb einer Zeitreihe der Sensordaten; Synchronisieren der Zeitreihe der Betriebsgröße mit der Zeitreihe der Sensordaten; und
Identifizieren des Ereigniszeitpunkts in der Zeitreihe der Betriebsgröße basierend auf dem Ereigniszeitpunkt der Zeitreihe der Sensordaten.

Hierdurch kann der technische Vorteil erreicht werden, dass eine weitere Verbesserung des Verfahrens zum Erzeugen eines Trainingsdatensatzes und eine weitere Verbesserung des entsprechend erzeugten Trainingsdatensatzes erreicht werden können. Hierzu werden zum Identifizieren der Betriebszustände bzw. zum Ermitteln des Ereigniszeitpunkts Sensordaten eines weiteren Sensors berücksichtigt. Die Sensordaten bilden hierbei das Handwerkzeug im jeweiligen Betriebszustand ab und sind zur Identifizierung des Ereigniszeitpunkts geeignet.

Hierzu umfassen die Sensordaten ebenfalls Zeitstempel, die Zeitpunkte definieren, zu denen die Sensordaten jeweils aufgenommen wurden.

Die Sensordaten werden gemäß ihrer Zeitstempel in einer entsprechenden Zeitreihe angeordnet und innerhalb der Zeitreihe wird basierend auf den jeweiligen Zeitstempeln der Ereigniszeitpunkt ermittelt. Darauffolgend werden die Zeitreihen der Messwerte der Betriebsgröße und die Zeitreihe der Sensordaten gemäß der jeweiligen Zeitstempel synchronisiert. Basierend auf dem Ereigniszeitpunkt innerhalb der Zeitreihe der Sensordaten wird darauffolgend der Ereigniszeitpunkt in der Zeitreihe der Betriebsgröße identifiziert. Durch die zusätzliche Information der Sensordaten kann eine präzisere Ermittlung des Ereigniszeitpunkts innerhalb der Zeitreihe der Messwerte der Betriebsgröße erreicht werden. Dies erlaubt einen präziseren Trainingsdatensatz.

Nach einer Ausführungsform sind die Sensordaten Daten eines externen Sensors, insbesondere eines Kamerasensors.

Hierdurch kann der technische Vorteil erreicht werden, dass eine weitere Verbesserung des Verfahrens zum Erzeugen eines Trainingsdatensatzes erzielt werden kann. Die Sensordaten basieren hierbei auf Daten eines externen Sensors. Dieser kann beispielsweise als ein Kamerasensor ausgebildet sein. Durch die Kameradaten des Kamerasensors kann der Betrieb der Handwerkzeugmaschine, während dem die Messwerte der Betriebsgröße aufgenommen wurden, abgebildet werden. Durch das Abbilden des Betriebs der Handwerkzeugmaschine können die unterschiedlichen Betriebszustände in den Sensordaten eindeutig abgebildet werden.

Hierüber lässt sich der Ereigniszeitpunkt, an dem die Handwerkzeugmaschine von dem ersten Betriebszustand in den zweiten Betriebszustand übergeht, eindeutig identifizieren. Der Ereigniszeitpunkt kann hierbei beispielsweise den Zeitpunkt beschreiben, an dem in dem oben beschriebenen Beispiel beim Einschrauben der Schraube in das Werkstück der Formschluss zwischen der Schraube und dem Werkstück erreicht ist. Dieser Zeitpunkt kann durch die Kameradaten des Kamerasensors, die den Schraubvorgang der Handwerkzeugmaschine abbilden, eindeutig identifiziert werden. Dies ermöglicht durch Berücksichtigung der Zeitstempel der Kameradaten, die jeweils den Aufnahmezeitpunkt der Kameradaten identifizieren, eine Eindeutige Identifizierung des Ereigniszeitpunkts.

Durch die Synchronisierung der beiden Zeitreihen, der Messdaten der Betriebsgröße und der Kameradaten, kann in der Zeitreihe der Messdaten der Betriebsgröße somit präzise der Zeitpunkt identifiziert werden, an dem der Formschluss zwischen der Schraube und dem Werkstück erreicht ist. Durch das entsprechende Labeln der Messwerte der Betriebsgröße, in dem der jeweils identifizierte Ereigniszeitpunkt gekennzeichnet ist, kann die künstliche Intelligenz basierend auf den Messdaten der Betriebsgröße darauf trainiert werden, die verschiedenen Betriebszustände der Handwerkzeugmaschine zu ermitteln bzw. den Ereigniszeitpunkt vorherzusagen. Dies ermöglicht einen präzisen Trainingsdatensatz, auf dem ein optimiertes Training einer künstlichen Intelligenz zum Ermitteln von Betriebszuständen bzw. zum Vorhersagen von Ereigniszeitpunkten ermöglicht ist.

Nach einem weiteren Aspekt wird ein Verfahren zum Trainieren einer künstlichen Intelligenz zum Ermitteln eines Betriebszustands einer Handwerkzeugmaschine bereitgestellt, wobei das Verfahren umfasst:
Bereitstellen eines gemäß dem erfindungsgemäßen Verfahren zum Erzeugen eines Trainingsdatensatzes nach einer der voranstehenden Ausführungsformen erzeugten Trainingsdatensatzes; und
Ausführen eines Trainings der künstlichen Intelligenz zum Ermitteln eines Betriebszustands und/oder zum Vorhersagen eines Ereigniszeitpunkts einer Handwerkzeugmaschine basierend auf dem Trainingsdatensatz.

Hierdurch kann der technische Vorteil erreicht werden, dass ein verbessertes Verfahren zum Trainieren einer künstlichen Intelligenz bereitgestellt wird, das geeignet ist, die künstliche Intelligenz auf das Erkennen von Betriebszuständen einer Handwerkzeugmaschine und das Vorhersagen von Ereigniszeitpunkten, in denen ein Übergang zwischen Betriebszuständen der Handwerkzeugmaschine erfolgt, gemäß dem erfindungsgemäßen Verfahren zum Steuern einer Handwerkzeugmaschine zu trainieren. Durch die Verwendung des erfindungsgemäßen Trainingsdatensatzes ist das Training der künstlichen Intelligenz auf den Anwendungsfall der künstlichen Intelligenz in der Steuerung der Handwerkzeugmaschine gemäß dem Verfahren zum Steuern einer Handwerkzeugmaschine angepasst, sodass optimale Trainingsergebnis erreicht und optimal trainierte künstliche Intelligenzen erzielt werden können.

Nach einem weiteren Aspekt wird eine künstliche Intelligenz zum Ermitteln eines Betriebszustands einer Handwerkzeugmaschine und/oder zum Vorhersagen eines Ereigniszeitpunkts gemäß dem Verfahren nach einer der voranstehenden Ausführungsformen bereitgestellt, wobei die künstliche Intelligenz nach dem erfindungsgemäßen Verfahren zum Trainieren einer künstlichen Intelligenz trainiert ist.

Hierdurch kann der technische Vorteil erreicht werden, dass ein möglichst zuverlässiges und leistungsfähiges Zustandsbestimmungsmodul für eine Steuerung der Handwerkzeugmaschine nach dem erfindungsgemäßen Verfahren zum Steuern einer Handwerkzeugmaschine bereitgestellt, das eingerichtet ist, die jeweiligen Betriebszustände der Handwerkzeugmaschine zu erkennen beziehungsweise Ereigniszeitpunkte, an denen eine Übergang zwischen Betriebszuständen erfolgt, vorherzusagen. Indem die künstliche Intelligenz gemäß dem erfindungsgemäßen Verfahren zum Trainieren einer künstlichen Intelligenz trainiert ist, ist die künstliche Intelligenz optimal auf den Einsatz in einer Steuerung eines Handwerkzeugmaschine gemäß dem Verfahren zum Steuern einer Handwerkzeugmaschine eingerichtet.

Nach einer Ausführungsform ist die künstliche Intelligenz als ein künstliches neuronales Netz, insbesondere als ein Netz mit wenigstens einer rekurrenten Schicht mit einem internen Zustandsspeicher, ausgebildet ist.

Hierdurch kann der technische Vorteil erreicht werden, dass eine besonders zuverlässige und leistungsfähige künstliche Intelligenz bereitgestellt werden kann. Das künstliche neuronale Netz kann insbesondere als ein Long-Short-Term-Memory (LSTM) Netz ausgebildet sein. Das LSTM Netz ist hierbei insbesondere für das Erkennen und von Betriebszuständen der Handwerkzeugmaschine und das Vorhersagen von Ereigniszeitpunkten, in denen ein Übergang zwischen verschiedenen Betriebszuständen erfolgt, geeignet. LSTM Netze sind aus dem Stand der Technik für die Mustererkennung und das Vorhersagen von Verhalten oder Ereignissen basierend auf historischen Daten bekannt.

Die Ausführung des neuronalen Netzes als LSTM Netz (Long Short Term Memory) ist als Netzwerk-Layer geeignet und kann mit weiteren Netzwerk-Layern in einem Netzwerk kombiniert werden.

Nach einem weiteren Aspekt wird eine Recheneinheit bereitgestellt, die eingerichtet ist, das Verfahren zum Steuern einer Handwerkzeugmaschine nach einer der voranstehenden Ausführungsformen und/oder das Verfahren zum Erzeugen eines Trainingsdatensatzes nach einer der voranstehenden Ausführungsformen und/oder das erfindungsgemäße Verfahren zum Trainieren einer künstlichen Intelligenz und/oder die erfindungsgemäße künstliche Intelligenz auszuführen.

Nach einem weiteren Aspekt wird ein Computerprogrammprodukt umfassend Befehle bereitgestellt, die bei der Ausführung des Programms durch eine Datenverarbeitungseinheit diese veranlassen, das Verfahren zum Steuern einer Handwerkzeugmaschine nach einer der voranstehenden Ausführungsformen und/oder das Verfahren zum Erzeugen eines Trainingsdatensatzes nach einer der voranstehenden Ausführungsformen und/oder das erfindungsgemäße Verfahren zum Trainieren einer künstlichen Intelligenz und/oder die erfindungsgemäße künstliche Intelligenz auszuführen.

Nach einem weiteren Aspekt wird eine Handwerkzeugmaschine mit einer Recheneinheit und wenigstens einem Sensor zum Ermitteln von Sensordaten wenigstens einer Betriebsgröße der Handwerkzeugmaschine bereitgestellt, wobei die Recheneinheit ausgebildet ist, ein Verfahren zum Steuern der Handwerkzeugmaschine auszuführen, wobei das Verfahren umfasst:
Empfangen von Sensordaten wenigstens einer Betriebsgröße der Handwerkzeugmaschine;
Empfangen eines auf einer Nutzereingabe eines Nutzers der Handwerkzeugmaschine basierenden Eingabewerts für einen Steuerungsparameter der Handwerkzeugmaschine;
Ermitteln eines ersten Zielwerts des Steuerungsparameters basierend auf den Sensordaten und dem Eingabewert;
Ausführen eines Zustandsbestimmungsmoduls auf die Sensordaten und Ermitteln eines Betriebszustands der Handwerkzeugmaschine;
Ermitteln eines zweiten Zielwerts des Steuerungsparameters basierend auf dem ermittelten Betriebszustand der Handwerkzeugmaschine;
Ermitteln eines Ausgabezielwerts des Steuerungsparameters basierend auf dem ersten Zielwert und dem zweiten Zielwert; und
Ausgeben des Ausgabezielwerts an eine Aktorik der Handwerkzeugmaschine zum Steuern der Handwerkzeugmaschine.

Hierdurch kann der technische Vorteil erreicht werden, dass eine verbesserte Handwerkzeugmaschine bereitgestellt werden kann, die eingerichtet ist, dass Verfahren zum Steuern einer Handwerkzeugmaschine mit den oben genannten technischen Vorteilen auszuführen.

Ausführungsbeispiele der Erfindung werden anhand der folgenden Zeichnungen erläutert. In den Zeichnungen zeigen:
- Fig. 1: eine schematische Darstellung einer Handwerkzeugmaschine gemäß einer Ausführungsform;
- Fig. 2: eine weitere schematische Darstellung einer Handwerkzeugmaschine, in der einzelne Funktionsabläufe der Handwerkzeugmaschine illustriert sind;
- Fig. 3: zeitliche Verläufe einer Betriebsgröße einer Handwerkzeugmaschine und eines Rotationswinkels eines Motors der Handwerkzeugmaschine;
- Fig. 4: eine schematische Darstellung einer Handwerkzeugmaschine gemäß einer Ausführungsform, wobei die Handwerkzeugmaschine in verschiedenen Betriebszuständen gezeigt ist;
- Fig. 5: eine schematische Darstellung einer Antriebsregelung der Handwerkzeugmaschine gemäß einer Ausführungsform;
- Fig. 6: ein Flussdiagramm eines Verfahrens zum Steuern einer Handwerkzeugmaschine gemäß einer Ausführungsform;
- Fig. 7: ein weiteres Flussdiagramm des Verfahrens zum Steuern einer Handwerkzeugmaschine gemäß einer weiteren Ausführungsform;
- Fig. 8: ein weiteres Flussdiagramm des Verfahrens zum Steuern einer Handwerkzeugmaschine gemäß einer weiteren Ausführungsform;
- Fig. 9: eine schematische Darstellung einer künstlichen Intelligenz, die eingerichtet ist, in einer Steuerung der Handwerkzeugmaschine eingesetzt zu werden;
- Fig. 10: ein Flussdiagramm eines Verfahrens zum Erzeugen eines Trainingsdatensatzes für ein Training einer künstlichen Intelligenz gemäß einer Ausführungsform;
- Fig. 11: ein weiteres Flussdiagramm eines Verfahrens zum Erzeugen eines Trainingsdatensatzes für ein Training einer künstlichen Intelligenz gemäß einer weiteren Ausführungsform;
- Fig. 12: ein Flussdiagramm eines Verfahrens zum Trainieren einer künstlichen Intelligenz; und
- Fig. 13: eine schematische Darstellung eines Computerprogrammprodukts.

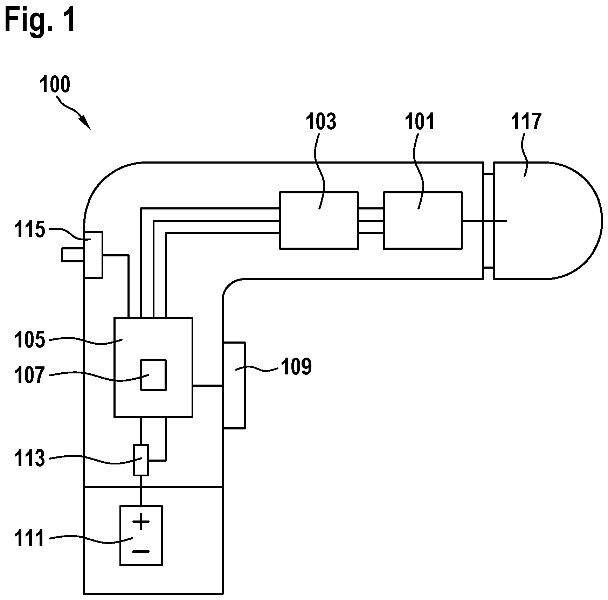

Fig. 1 zeigt eine schematische Darstellung einer Handwerkzeugmaschine 100 gemäß einer Ausführungsform.

Die beispielhafte Handwerkzeugmaschine 100 umfasst einen Motor 101 mit einer Motorsteuerung 103. Die Handwerkzeugmaschine 100 umfasst ferner eine Recheneinheit 105, auf der ein Zustandsbestimmungsmodul 107 installiert und ausführbar ist. Die Recheneinheit 105 mit dem Zustandsbestimmungsmodul 107 sind eingerichtet, das erfindungsgemäße Verfahren zum Steuern einer Handwerkzeugmaschine 100 auszuführen. Die Handwerkzeugmaschine 100 umfasst ferner eine Spannungsquelle 111 und eine Strommessvorrichtung 113. Die Handwerkzeugmaschine 100 umfasst ferner einen Auslöseschalter 109, mittels dem durch einen Nutzer die Handwerkzeugmaschine 100 steuerbar ist. Darüber hinaus umfasst die Handwerkzeugmaschine 100 eine Einstellvorrichtung 115 mit der verschiedene Betriebsmodi der Handwerkzeugmaschine 100 einstellbar sind. Abschließend umfasst die Handwerkzeugmaschine 100 ein Werkzeug 117, mittels dem durch Ausführung der Handwerkzeugmaschine 100 entsprechende Arbeitsvorgänge ausgeführt werde können.

Die Handwerkzeugmaschine 100 kann beispielsweise als ein Schrauber bzw. ein akkubetriebener Schrauber ausgebildet sein. Hierzu kann das Werkzeug 117 insbesondere als eine Aufnahme für auswechselbare Schraubendreherklingen ausgebildet sein.

Die gezeigte Motorsteuerung 103 kann insbesondere ein zugehöriges Leistungsteil der Motorsteuerung umfassen. Der Motor 101 kann ferner ein entsprechendes Getriebe umfassen, das in Fig. 1 nicht explizit dargestellt ist.

Der Motor 101 kann beispielsweise als ein mechanischer oder elektrisch kommutierter Gleichstrommotor ausgebildet sein. Das entsprechende Getriebe kann als Planetengetriebe ausgebildet sein.

Erfindungsgemäß kann der Leistungsteil der Motorsteuerung 103 ein Ansteuersignal beispielsweise über PWM Pulsweitenmodulation in die für den Motor 101 erforderlichen Spannungs- bzw. Stromverläufe umwandeln. Hierzu können zunächst die Ansteuersignale in entsprechende Digitalsignale umgewandelt werden, worauf das entsprechend umgewandelte Signal über eine n geeigneten Datenbus, beispielsweise I2C oder SPI, übertragen werden kann. Für den Fall eines elektrisch kommutierten Gleichstrommotors kann ein entsprechendes Drehfeld erzeugt werden, welches synchron zur Drehung des Rotors nachgeführt werden kann. Die Motorsteuerung kann eine spannungsgeführte oder drehzahlgeführte Regelung realisieren. Bei einer spannungsgeführten Regelung wird mit steigender Last (Drehmoment) unter Anstieg des Betriebsstroms die Motordrehzahl reduziert. Eine Information zur Motordrehzahl bzw. zum Drehwinkel kann systeminhärent anhand der Phasenwechsel abgeleitet werden. Zusätzlich oder alternativ kann ein kontinuierlicher Drehwinkelsensor (in Fig. 1 nicht dargestellt) zur Erkennung der Rotorposition eingesetzt werden. Ein derartiges Rotorpositionssignal kann an die Recheneinheit 105 zur Steuerung der Handwerkzeugmaschine 100 übertragen werden. Diese Signalübertragung kann wiederum über PWM, I2C, SPI oder analog erfolgen.

Gemäß einer Ausführungsform wird anstelle des Drehwinkelsensors ein Algorithmus in einer Steuereinheit realisiert, der anhand der gemessenen Motor-Ströme und -Spannungen, welche Signalanteile beinhalten, die aus dem Rotor zurückinduzierten Spannungen entstehen, auf den Drehwinkel zurückschließt. In dieser Ausführungsform kann durch die Algorithmusausführung der Drehwinkelsensor funktional ersetzt werden.

Die Stromversorgung über die Spannungsquelle 111 kann durch eine Mehrzahl von Batterieelementen, beispielsweise Lithium-Ion-Zellen, bereitgestellt werden. Durch ein entsprechendes Batteriemanagementsystem können Überladungen, Überströme und Tiefentladungen verhindert werden.

Der Auslöseschalter 109 kann gemäß einer Ausführungsform als ein Potenziometer ausgeführt werden, das der Recheneinheit 103 zur Steuerung der Handwerkzeugmaschine 100 analoge Steuersignale bereitstellt, die der linearen Betätigung des Auslöseschalters 109 entsprechen. Über die Betätigung des Auslöseschalters 109 können entsprechende Nutzereingaben zur Steuerung der Handwerkzeugmaschine 100 bereitgestellt werden.

Die Strommessvorrichtung 113 kann den Akkustrom der Spannungsquelle 111, der vom Motorstrom des Motors 101 dominiert wird, bestimmen. Die Steuerung hat in der Regel eine Stromaufnahme von weniger als 200 Milliampere. Als Messelement kann ein niederohmiger Widerstand oder ein Hall-Sensor verwendet werden. Mithilfe einer Verstärkerschaltung und einer Pegelanpassung kann der Recheneinheit 103 als Steuerung der Handwerkzeugmaschine 100 ein stromproportionales analoges Signal zur Verfügung gestellt werden.

Die Einstellvorrichtung 115 kann als Drehpotenziometer, als Schaltwippe oder als Doppelschaltelement ausgeführt sein. Es gilt den für die Automatikfunktion benötigten Schwellwert durch den Nutzer beeinflussbar zu realisieren.

Die Recheneinheit 101 kann einen Microcontroller mit üblicher Beschaltung (Spannungsregler, Taktquelle, EMV-Maßnahmen) und Kommunikationsvorrichtung (BlueTooth, 4G, WLAN) umfassen. Der Microcontroller kann einen Analog-Digital-Wandler und digitale Schnittstellen umfassen, um die Signale des Auslöseschalters 109, der Einstellvorrichtung 115, der Strommessvorrichtung 113, der Versorgungsspannung, der Motordrehzahl und die Ansteuersignale des Motors 101 zu erzeugen bzw. zu erfassen. Der Microcontroller (in Fig. 1 nicht explizit dargestellt) kann das Zustandsbestimmungsmodul 107 zum Ausführen des erfindungsgemäßen Verfahrens zum Steuern der Handwerkzeugmaschine 100 ausführen.

Die Handwerkzeugmaschine 100 kann als ein Schrauber, ein Drehschlagschrauber oder als ein einfacher Akku-Schrauber ausgebildet sein. Alternativ kann die Handwerkzeugmaschine 100 als ein elektrischer Bohrer, ein Schlagbohrer, ein Bohrhammer oder ein Bohrmeißel ausgebildet sein.

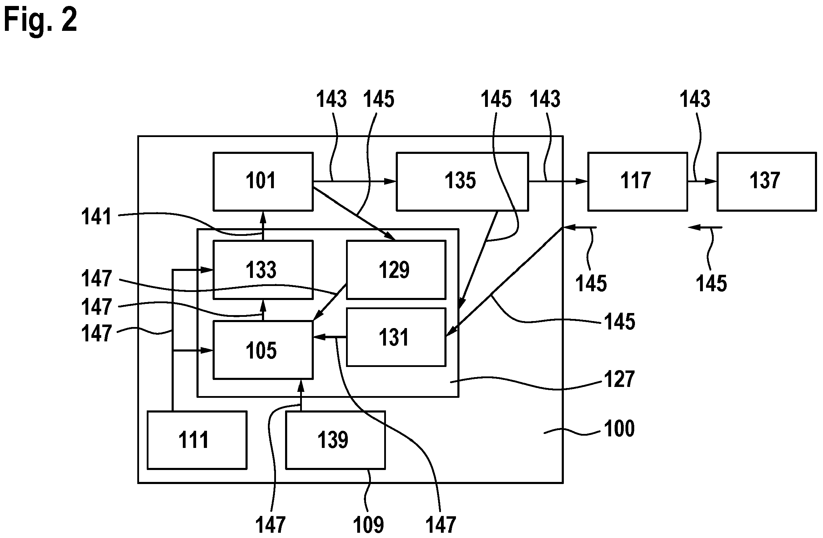

Fig. 2 zeigt eine weitere schematische Darstellung einer Handwerkzeugmaschine 100, in der einzelne Funktionsabläufe der Handwerkzeugmaschine 100 illustriert sind.

Fig. 2 zeigt eine weitere schematische Darstellung einer Ausbildungsform der erfindungsgemäßen Handwerkzeugmaschine 100. Die Handwerkzeugmaschine 100 umfasst den Motor 101, die Recheneinheit 105, die auf einer Platine 127 angeordnet ist, die Energiequelle 109 und das Werkzeug 117.

Anhand der gezeigten graphischen Darstellung werden einige Funktionsweisen der Handwerkzeugmaschine 100 dargestellt. Es sind einige der Bauteile der Handwerkzeugmaschine 100 aus Fig. 1 dargestellt, während andere Bauteile bzw. Komponenten nicht dargestellt sind, um die gezeigte Darstellung möglichst einfach zu halten. Die gezeigte Handwerkzeugmaschine 100 kann jedoch alle in Fig. 1 dargestellten Komponenten umfassen.

Neben der Recheneinheit 105, die wie oben bereits beschrieben, als ein Microcontroller ausgebildet sein kann, bzw. einen derartigen Microcontroller umfassen kann, und auf der erfindungsgemäß das in Fig. 1 gezeigte Zustandsbestimmungsmodul 107 installiert ist, sind auf der Platine 127 ferner ein Drehzahlsensor 129, mittels dem eine Motordrehzahl des Motors 101 gemessen werden kann, und ein Vibrationssensor 131, mittels dem Vibrationen der Handwerkzeugmaschine 100 gemessen werden können und ein Wechselrichter 133 installiert.

Über den Auslöseschalter 109 kann ein Nutzer der Handwerkzeugmaschine 100 Nutzereingaben 139 an die Recheneinheit 105 mittels einer elektrischen Signalübertragung 147 übertragen. Über die Nutzereingaben 139, die beispielsweise ein Triggerlevel des Auslöseschalters 109 umfassen, kann eine Leistung der Handwerkzeugmaschine 100 geregelt werden. Ferner können die Nutzereingaben 139 Drehrichtungen des Motors 101, die beispielsweise eine Schraub- oder Borrichtung definieren, oder Betriebsmodi der Handwerkzeugmaschine 100, die beispielsweise einen Schraubvorgang mit oder ohne Schlagfunktion beschreiben, festlegen.

Basierend auf den Nutzereingaben 139 steuert die Recheneinheit 105 die Steuerung der Handwerkzeugmaschine 100 und gibt über eine elektrische Signalübertragung 147 entsprechende Steuersignale an den Wechselrichtung 133 aus. Der Wechselrichter 133 gibt eine entsprechende elektrische Energieübertragung 141 an den Motor 101 aus. Der Motor 101 bewirkt über eine entsprechende Kraft-Drehmoment-Übertragung 143 eine Kraftübertragung 135 an das Werkzeug 117, mittels dem das Werkstück 137 bearbeitet werden kann.

Erfindungsgemäß nutzt das Verfahren zum Steuern einer Handwerkzeugmaschine 100, das durch die Recheneinheit 105 ausgeführt wird, Messwerte einer Betriebsgröße, auf der basierend Betriebszustände der Handwerkzeugmaschine 100 ermittelt werden. Die Betriebsgröße kann hierbei beispielsweise der Motorstrom, eine Motorleistung, sowie eine Drehzahl- bzw. ein Drehmoment des Motors 101 sein. In der gezeigten Ausführungsform wird als Betriebsgröße, auf der basierend durch das erfindungsgemäße Verfahren Betriebszustände der Handwerkzeugmaschine 100 bestimmt werden, die Motordrehzahl des Motors 101 berücksichtigt. Diese werden durch den dargestellten Drehzahlsensor 129 gemessen, der die Bewegung 145 des Motors 101 detektiert. Ferner werden in der gezeigten Ausführungsform Vibrationen/Bewegungen 145 der Handwerkzeugmaschine 100 bzw. des Werkzeugs 117 bzw. des Werkstücks 137 als Betriebsgröße berücksichtigt. Die Vibrationen/Bewegungen werden hierbei durch den Vibrationssensor 131 gemessen. Entsprechende Messsignale werden zur Weiterverarbeitung von dem Drehzahlsensor 129 und dem Vibrationssensor 131 an die Recheneinheit 105 weitergeleitet.

Der Vibrationssensor 131 kann beispielsweise als ein Beschleunigungssensor ausgebildet sein.

Erfindungsgemäß werden zum Steuern der Handwerkzeugmaschine 100 die gemessene Drehzahl bzw. die detektierten Vibrationen durch Ausführung eines Zustandsbestimmungsmoduls 107 analysiert und ein vorliegender Betriebszustand der Handwerkzeugmaschine 100 ermittelt. Basierend auf dem ermittelten Betriebszustand wird die Steuerung der Handwerkzeugmaschine 100 entsprechend angepasst.

Für eine nähere Beschreibung des erfindungsgemäßen Verfahrens zum Steuern der Handwerkzeugmaschine 100 wird auf die Beschreibung der folgenden Figuren verwiesen.

Die Kraftübertragung 135 der Handwerkzeugmaschine 100 kann als ein Direktantrieb oder über ein Getriebe realisiert werden.

Ferner kann der in den Figuren 1 und 2 nur schematisch angedeutet Antrieb der Handwerkzeugmaschine 100 verschiedene Antriebsoptionen umfassen, wie beispielsweise ein Schlagwerk, ein Hammerwerk oder ein Meißelwerk.

Wie bereits erwähnt kann die Übertragung der Kraft des Motors 101 auf den Antrieb der Handwerkzeugmaschine 100 über ein Getriebe bewirkt werden. Dieses kann beispielsweise als ein Schaltgetriebe mit zwei, drei oder mehr Gängen ausgebildet sein. Das Getriebe kann mit einer Rutschkupplung verbunden sein, die wiederum eine Direktverbindung an den Antrieb aufweist. Eine alternative Lösung ohne Rutschkupplung, in der das Getriebe unmittelbar mit dem Antrieb verbunden ist, ist ebenfalls denkbar.

Die durch den Vibrationssensor 131 gemessenen Vibrationen bzw. Bewegungen können beispielsweise durch den Nutzer der Handwerkzeugmaschine 100 ausgelöste Bewegungen der Handwerkzeugmaschine 100 umfassen. Ferner können die Bewegungen bzw. Vibrationen durch den Motor bzw. das Getriebe bzw. den Antrieb hervorgerufen sein. Alternativ hierzu können die Bewegungen bzw. Vibrationen, die durch den Vibrationssensor 131 gemessen werden, durch Bewegungen eines Bits auf einem Schraubenkopf hervorgerufen werden bzw. auf Krafteinwirkungen der Schraube auf das zu bearbeitende Werkstück 137 resultieren.

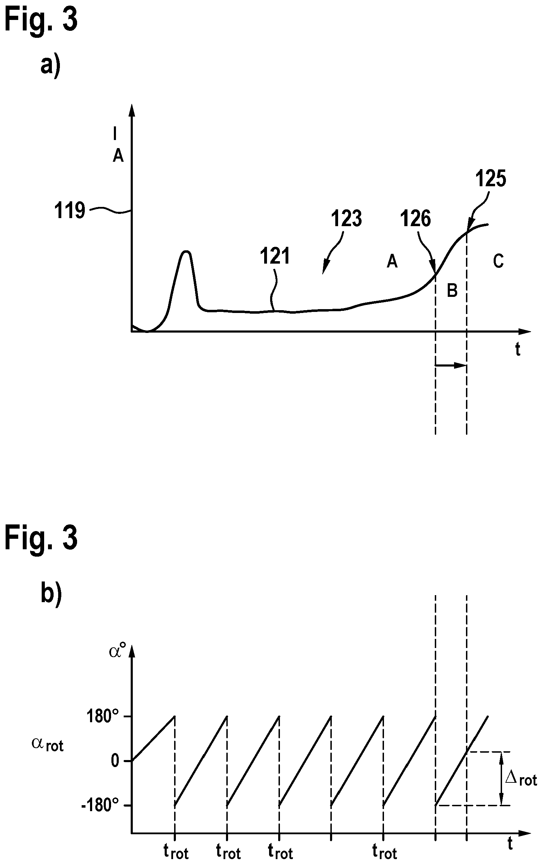

Fig. 3 zeigt zeitliche Verläufe einer Betriebsgröße 119 einer Handwerkzeugmaschine 100 und eines Rotationswinkels αᵣₒₜ eines Motors 101 der Handwerkzeugmaschine 100.

In der Graphik a) ist ein zeitlicher Verlauf einer Betriebsgröße 119 einer Handwerkzeugmaschine 100 dargestellt. In der gezeigten Ausführungsform beschreibt die Betriebsgröße 119 einen Motorstrom eines Motors 101 einer Handwerkzeugmaschine 100. Die Handwerkzeugmaschine 100 ist in der gezeigten Ausführungsform als ein Schrauber ausgebildet und der gezeigte Verlauf der Betriebsgröße 119 zeigt den zeitlichen Verlauf des Motorstroms in einem Schraubfall, in dem eine selbstschneidende Schraube in ein Werkstück 137 aus Holz oder einem vergleichbaren Material eingeschraubt wird.

Der zeitliche Verlauf der Betriebsgröße 119 beschreibt eine Zeitreihe 123, die aus einer Mehrzahl zeitlich geordneter Messwerte 121 des Motorstroms besteht. Die Messwerte 121 wurden während des Betriebs der Handwerkzeugmaschine 100, sprich beim Einschrauben der Schraube in das Werkstück, durch einen entsprechenden Stromsensor innerhalb der Handwerkzeugmaschine 100 aufgenommen.

Grafik a) beschreibt hierbei einen typischen Verlauf des Motorstroms I beim Einschrauben einer selbstschneidenden Schraube in Holz oder ähnliche Werkstoffe. Der Motorstrom I bildet durch die Drehmomentkonstante mit der Einheit Newtonmeter pro Ampere das vom Motor 101 abgegebene Drehmoment ab. Das aus dem Anlaufstrom resultierende Drehmoment wird zu Beginn des Schraubfalls für die Beschleunigung des Rotors des Elektromotors 101 aufgewendet. Hieraus resultiert der zu Beginn der Zeitreihe 123 auftretende Peak des Motorstroms I. Im Anschluss an den Anlauf des Rotors ist die Drehzahl weitestgehend konstant, wodurch der nahezu waagerechte Verlauf des Motorstroms I bewirkt wird.

Dieser Bereich, in dem zunächst der Anlaufpeak und darauffolgend der nahezu waagerechte Verlauf des Motorstroms I detektiert wird, wird in Grafik a) durch den Betriebszustand A charakterisiert. In diesem Betriebszustand A wird zu einem Großteil von über 90 % das aufgebrachte Drehmoment in tatsächliche mechanische Arbeit an der Schraube bzw. dem Werkstück umgewandelt und die Schraube entsprechend in das Werkstück eingeschraubt.

In Grafik a) sind ferner zwei Ereigniszeitpunkte 125, 126 markiert, in denen ein Übergang zwischen dem Betriebszustand A, zunächst in einen Betriebszustand B und darauffolgend in einen weiteren Betriebszustand C erfolgen.

Im Bereich des Ereigniszeitpunkts 126 zeigt der Motorstrom I im Betriebszustand A einen gleichmäßigen Anstieg. Dies ist auf das weitere Einschrauben der Schraube in das Werkstück begründet, für das mit zunehmender Einschraubtiefe ein immer größeres Drehmoment benötigt wird, zu dessen Generierung ein ansteigender Motorstrom I benötigt wird.

Ausgehend von dem Ereigniszeitpunkt 126 erfolgt ein steilerer Anstieg des Motorstroms I im Vergleich zu dem im Betriebszustand A verhältnismäßig sanft ansteigenden Anstieg. Dieser vermehrt steilere Anstieg des Motorstroms I ist durch das Aufliegen des kegelförmigen Schraubenkopfes der selbstschneidenden Schraube auf der Oberfläche des zu bearbeitenden Werkstücks verursacht. Zum Zeitpunkt des Ereigniszeitpunkts 126 trifft der kegelförmige Schraubenkopf der selbstschneidenden Schraube auf die Oberfläche des Werkstücks auf. Der Betriebszustand B ist somit durch das Einschrauben des kegelförmigen Schraubenkopfes in das Werkstück gekennzeichnet. Aufgrund der Kegelform des Schraubenkopfes wird für das Einschrauben des Schraubenkopfes in das Werkstück ein erhöhtes Drehmoment benötigt, wodurch der steile Anstieg des Motorstroms I begründet ist.

Der Ereigniszeitpunkt 125 beschreibt hingegen den Übergang aus dem Betriebszustand B, in dem das Einschrauben des kegelförmigen Schraubenkopfes in das Werkstück beschrieben ist, in den Betriebszustand C, in dem der Schraubenkopf vollständig in das Werkstück eingeschraubt ist. Der Ereigniszeitpunkt 125 beschreibt hierbei den Punkt, an dem der Schraubenkopf eben mit der Oberfläche des Werkstücks abschließt. Dieser Zeitpunkt wird im Übrigen auch als Flush-Point bezeichnet. Der durch den Ereigniszeitpunkt 126 gekennzeichnete Zeitpunkt, an dem die Kontaktierung des kegelförmigen Schraubenkopfes mit der Oberfläche des Werkstücks auftritt, wird im Übrigen auch als Pre-Flush-Point bezeichnet.

In der gezeigten Ausführung ist im Betriebszustand C ein abflachender Verlauf des Motorstroms I dargestellt. Dies kann durch das Abscheren des Kopfes oder durch eine Beschädigung des Materials des Werkstücks bei weiterer Verschraubung der Schraube über den Flush-Point hinaus realisiert sein.

Grafik b) zeigt einen zeitlichen Verlauf eines Rotationswinkels αᵣₒₜ. Der zeitliche Verlauf zeigt exemplarisch das Signal eines Drehwinkelgebers. Im gezeigten Beispiel weist der Sensor einen Eindeutigkeitsbereich von 360° auf. Dies ist nicht erforderlich, kleinere Eindeutigkeitsbereiche sind ebenso ausreichend. In der Regel kann der Eindeutigkeitsbereich des Sensors an die Drehzahl des Motors 101 gekoppelt sein. Eine absolute Drehwinkelinformation über den gesamten Schraubvorgang von Beginn (Betätigen des Auslöseschalters 109 durch den Nutzer) bis zum gewünschten Abschalten kann anhand des Drehwinkelsensorsignals mithilfe des sogenannten Phase-Unwrapping erlangt werden. Dazu kann mithilfe des Wissens über die kontinuierliche Drehung des Motors 101 erkannt werden, dass der Wechsel von plus 180° zu beispielsweise minus 179° tatsächlich einem Drehwinkel von plus 181° entspricht.

In Grafik b) sind ferner Rotationszeitpunkte tᵣₒₜ gekennzeichnet. In den Rotationszeitpunkten tᵣₒₜ ist eine vollständige Rotation des Motors 101 erfolgt. Die Kenntnis bezgl. der Rotationszeitpunkte tᵣₒₜ bzw. des Rotationswinkels αᵣₒₜ des Motors 101 kann im Folgenden zur Vorhersage der Ereigniszeitpunkte 125, 126 genutzt werden. Bei Erreichen des oben beschriebenen Ereigniszeitpunkts 126, in dem ein Aufliegen des kegelförmigen Schraubenkopfes auf die Oberfläche des Werkstücks erfolgt, kann unter Kenntnis des Rotationswinkels der Ereigniszeitpunkt 125 vorhergesagt werden, an dem die Schraube eben mit der Oberfläche des Werkstücks abschließt. Grafik b) zeigt ferner eine Drehwinkeldifferenz Δᵣₒₜ als eine Differenz zwischen den Drehwinkeln αᵣₒₜ zu den Ereigniszeitpunkten 125, 126.

Der in Fig. 3 gezeigte Sachverhalt soll nur beispielhaft einen möglichen Anwendungsfall des erfindungsgemäßen Verfahrens illustrieren. Andere Anwendungsfälle, in denen die Handwerkzeugmaschine 100 nicht als Schrauber sondern beispielsweise als Bohrer oder Meißel oder Stichsäge ausgebildet ist, sollen durch die vorliegende Erfindung ebenfalls abgedeckt sein. Auch können mehr oder weniger und anders ausgestaltete Betriebszustände (A, B, C) berücksichtigt werden, als das in diesem Beispiel beschrieben ist.

Beispielsweise kann die Handwerkzeugmaschine 100 als Schrauber ausgebildet sein. Mögliche Betriebszustände A, B, C könne hierbei eine Schraubtiefe einer einzuschraubenden Schraube, ein Schrauben in einem bestimmten Schraubmodus (Schlagmodus, Ein-/Ausschrauben), eine Arbeitseffizienz, ein definiertes Drehmoment, eine Wahl der verwendeten Schraube oder einen Kickback bei hohen Drehmomenten beschreiben.

Fener kann die Handwerkzeugmaschine 100 als ein Bohrer ausgebildet sein. Die Betriebszustände A, B, C können hierbei einen Bohrmodus (Schlagbohren etc.), eine Ausrichtung der Handwerkzeugmaschine 100 zu einer Oberfläche eines zu bearbeitenden Werkstücks, eine Art des Einsatzwerkzeugs (Metall-, Holz-, Steinbohrer), eine Bohrtiefe, eine Ausrichtung der Handwerkzeugmaschine 100 relativ zu einer vorbestimmten Bohrstelle, eine Anbohren von Kabeln oder Rohren, ein Ausschlagen eines Bohrlochs, ein Auftreten von Bohrstaub oder ein Kickback bei einem plötzlichen Festdrehen der Handwerkzeugmaschine 100 beschreiben.

Ferner kann die Handwerkzeugmaschine 100 als ein Schlagbohrer oder ein Bohrhammer ausgebildet sein. Die Betriebszustände A, B, C können einen Betriebsmodus, einen Arbeitsfortschritt, eine Gefahr von Beschädigungen, Vibrationen und Lärm oder einen fehlenden Anpressdruck beschreiben.

Ferner kann die Handwerkzeugmaschine 100 als ein Meißel ausgebildet sein. Mögliche Betriebszustände A, B, C können ein falsches Einsatzwerkzeug, eine effektive Haltung der Handwerkzeugmaschine 100 oder einen Arbeitsfortschritt beschreiben.

Ferner können unabhängig von der Ausbildung der Handwerkzeugmaschine 100 mögliche Betriebszustände A, B, C Aspekte einer Arbeitssicherheit/Komfort wie beispielsweise Vibrations-/Lärmentwicklung, Vibrationsmonitoring, Drehmomentkontrolle bezüglich maximaler Drehmomente, einfaches Steuern der Handwerkzeugmaschine 100, richtiges Einspannen eines Werkzeugs in die Handwerkzeugmaschine 100 oder ein Erkennen von Situationen, wie ein Fallen von einer Leiter, ein Bohren in Kabel oder Rohre, umfassen.

Durch ein entsprechendes Training einer künstlichen Intelligenz des Zustandsbestimmungsmoduls 107 können die angeführten Betriebszustände A, B, C oder ähnliche Betriebszustände, die bei einem Betrieb einer Handwerkzeugmaschine 100 auftreten können, basierend auf Messwerten 121 einer Betriebsgröße 119 während des Betriebs der Handwerkzeugmaschine 100 ermittelt werden.

Die Betriebsgröße 119 kann hierbei beispielsweise der Motorstrom I oder ein Motor-Positionswinkel, eine Motor-Drehgeschwindigkeit, eine Spannung einer Spannungsquelle, Bewegungen und/oder Vibrationen innerhalb der Handwerkzeugmaschine (100) oder ähnliche messbare Parameter der Handwerkzeugmaschine 100 umfassen.

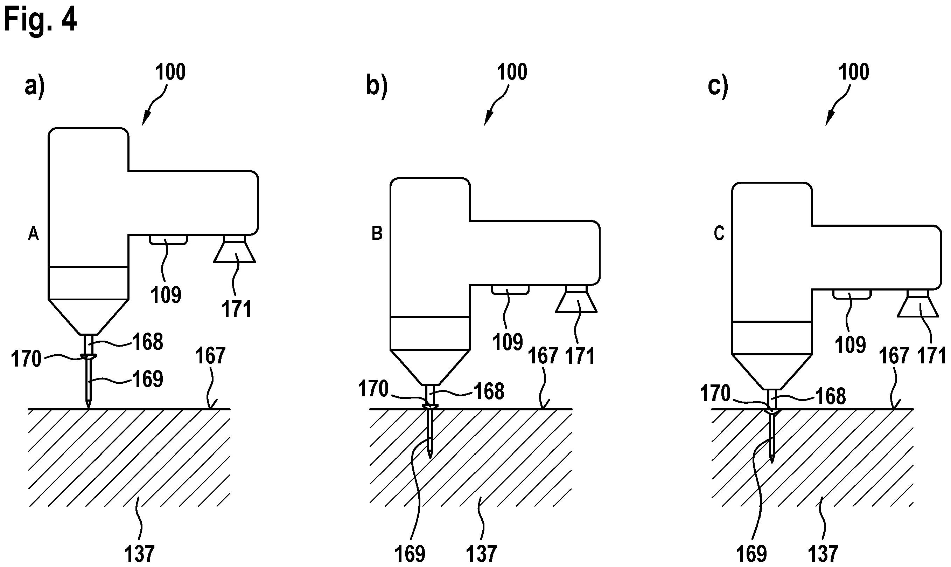

Fig. 4 zeigt eine schematische Darstellung einer Handwerkzeugmaschine 100 gemäß einer Ausführungsform, wobei die Handwerkzeugmaschine 100 in verschiedenen Betriebszuständen A, B, C gezeigt ist.

Fig. 4 beschreibt in grafischer Darstellung die zu Fig. 3 beschriebenen Betriebszustände A, B, C der Handwerkzeugmaschine 100. Die Handwerkzeugmaschine 100 ist wiederum als Schrauber ausgebildet und die Betriebszustände A, B, C beschreiben den Schraubverlauf, in dem eine Schraube 169 in ein Werkstück 137 eingeschraubt wird. Die Schraube 169 kann beispielsweise eine selbstschneidende Schraube sein und das Werkstück 137 aus Holz gefertigt sein. Die Handwerkzeugmaschine 100 weist hierzu ferner ein Schraubbit 168 auf.

In Grafik a) ist der Betriebszustand A dargestellt, in dem die Schraube 169 in das Werkstücks 137 eingeschraubt wird.

Grafik b) beschreibt den Betriebszustand B, der dadurch gekennzeichnet ist, dass der kegelförmige Schraubenkopf 170 an der Oberfläche 167 des Werkstück 137 angrenzt und im weiteren Verlauf in das Werkstück 137 eingeschraubt wird.

Grafik c) beschreibt den Betriebszustand C, der dadurch gekennzeichnet ist, dass die Schraube 169 eben mit der Oberfläche 167 des Werkstück 137 abschließt und damit der Flush-Point erreicht ist.

Wie oben beschrieben, stellt Grafik a) der Figur 3 den zeitlichen Verlauf des Motorstroms des Motors 101 der Handwerkzeugmaschine 100 in den verschiedenen Betriebszuständen A, B, C während des Einschraubens der Schraube 169 in das Werkstück 137 dar.

Im Betriebszustand A, in dem die Schraube 169 gleichmäßig in das Werkstück 137 eingeschraubt wird, zeigt der Motorstrom I einen weitestgehend waagerechten Verlauf, der mit zunehmender Einschraubtiefe eine leichte Steigung aufweist.

Der Betriebszustand B, der durch das Angrenzen des kegelförmigen Schraubenkopfes 170 an die Oberfläche 167 des Werkstücks 137 und das Einschrauben des Schraubenkopfes 170 in das Werkstück 137 gekennzeichnet ist, zeigt der Motorstrom I einen steilen Anstieg an, der durch das erhöhte Drehmoment begründet ist, der zum Einschrauben des kegelförmigen Schraubenkopfes 170 in das Werkstück 137 benötigt wird.

Der Betriebszustand C, der durch das Abschließen des Schraubenkopfes 170 mit der Oberfläche 167 gekennzeichnet ist, zeigt in Grafik 3 hingegen einen abflachenden Verlauf des Motorstroms I, der durch die Zerstörung der Schraube bzw. eine Zerstörung des Werkstücks 137 begründet sein kann.

In Figur 4 weist die Handwerkzeugmaschine 100 ferner einen externen Sensor 171 auf. Der externe Sensor 171 ist in der gezeigten Ausführungsform als ein Kamerasensor ausgebildet und ermöglicht das Aufnehmen von Kameradaten, mittels denen der Schraubverlauf des Einschraubens der Schraube 169 in das Werkstück 137 abgebildet werden kann. Die entsprechenden Kameradaten können wie zu den folgenden Figuren näher beschrieben werden wird, für ein Training des Zustandsbestimmungsmoduls 107 bzw. einer künstlichen Intelligenz 149 des Zustandsbestimmungsmoduls 107 verwendet werden.

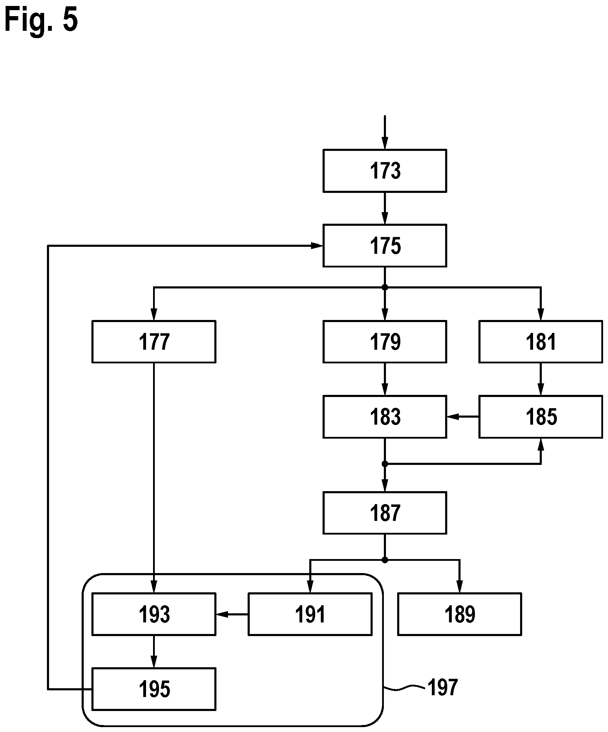

Fig. 5 zeigt eine schematische Darstellung einer Antriebsregelung 197 der Handwerkzeugmaschine 100 gemäß einer Ausführungsform.

Fig. 5 zeigt eine Regelungskette der Handwerkzeugmaschine 100.

Erfindungsgemäß umfasst die Regelungskette einen inneren Regelkreis 193 und einen äußeren Regelkreis 191. Der innere Regelkreis 193 dient hierbei zur Regelung des Antriebs der Handwerkzeugmaschine 100 basierend auf den Nutzereingaben 173 des Nutzers.

Zum Regeln des Antriebs der Handwerkzeugmaschine 100 basierend auf den Nutzereingaben 173 des Nutzers durch ausschließlich den inneren Regelkreis 193 erfolgen zunächst Nutzereingaben 173 durch den Nutzer. Dies kann beispielsweise durch Betätigung des Auslöseschalters 109 erfolgen. Hierüber können erste Zielwerte eines Steuerungsparameters der Handwerkzeugmaschine 100 durch die Nutzereingabe des Nutzers definiert werden. Der Steuerungsparameter kann hierbei beispielsweise eine Motordrehzahl, eine Motorleistung, ein über die Motordrehzahl definiertes Drehmoment umfassen. Alternativ kann der Steuerungsparameter eine Drehrichtung, wie beispielsweise beim Ein- oder Ausschrauben einer Schraube, oder eine Betriebsmodus, wie beispielsweise den Schlagmodus oder den Hammermodus, umfassen. Die Nutzereingaben 173 beschreiben hierbei Werte des Steuerungsparameters.

Über Sensormessungen 175 einer Betriebsgröße 119 werden Ist-Werte des Steuerungsparameters aufgenommen, die einen Ist-Zustand der Aktorik 195 einer Antriebsregelung 197 der Handwerkzeugmaschine 100 beschreiben.

Die Sensormessungen 175 der Betriebsgröße 119 können hierbei Messungen des Motorstroms, der Motordrehzahl, der Motorleistung, von Vibrationen des Motors bzw. der Handwerkzeugmaschine 100 oder andere aussagekräftige Betriebsgrößen umfassen, mittels denen eine Bestimmung eines Betriebszustands A, B, C ermöglicht ist.

Die ersten Zielwerte der Nutzereingaben 173 und die Ist-Werte der Sensormessungen 175 des Steuerungsparameters werden unter Ausführung einer digitalen Signalvorverarbeitung 177 an den inneren Regelkreis 193 übertragen.

Durch den inneren Regelkreis 193 werden entsprechende Steuerungssignale an die Aktorik 195 zum Ansteuern der Handwerkzeugmaschine 100 ausgegeben.

Der äußere Regelkreis 191 wird nun dazu verwendet, bei der Steuerung der Handwerkzeugmaschine 100 einen Betriebszustand A, B, C zu berücksichtigen, in dem sich die Handwerkzeugmaschine 100 während des Betriebs befindet.

Hierzu werden die ersten Zielwerte des Steuerungsparameters der Nutzereingabe 173 und insbesondere die Ist-Werte der Sensormessungen 175 des Steuerungsparameters nach einer digitalen Signalvorverarbeitung 197 einer Modellinferenz 183 unterzogen. In der Modellinferenz 183 greift die bereits beschriebene Ausführung des Zustandsbestimmungsmoduls 107. Da Zustandsbestimmungsmodul 107 ist hierbei eingerichtet, basierend auf den Sensormessungen 175 bzw. den entsprechenden Sensordaten des Steuerungsparameters einen Betriebszustand A, B, C, in dem sich die Handwerkzeugmaschine 100 befindet, zu erkennen. Alternativ oder zusätzlich hierzu kann das Zustandsbestimmungsmodul 107 eingerichtet sein, basierend auf den Sensordaten der Sensormessungen 175 der Betriebsgröße 119 einen Ereigniszeitpunkt 125, 126 vorherzusagen, an dem ein Übergang zwischen verschiedenen Betriebszuständen A, B, C der Handwerkzeugmaschine 100 erfolgt.

Das in der Modellinferenz 183 ausgeführte Zustandsbestimmungsmodul 107 kann hierbei als eine entsprechend trainierte künstliche Intelligenz ausgebildet sein, die auf das Ermitteln von Betriebszuständen A, B, C bzw. das Vorhersagen von Ereigniszeitpunkten 125, 126 basierend auf Messwerten einer Betriebsgröße 119 trainiert ist.

Die durch das Zustandsbestimmungsmodul 107 in Gestalt der Modellinferenz 183 ermittelte Information bzgl. der vorliegenden Betriebszustände A, B, C bzw. vorhergesagten Ereigniszeitpunkten 125, 126 werden nach einer Nachverarbeitung 187 dem äußeren Regelkreis 191 bereitgestellt.

Der äußere Regelkreis 191 ist daraufhin eingerichtet, basierend auf den Informationen der Modellinferenz 183 bzgl. der vorliegenden Betriebszustände A, B, C bzw. der vorhergesagten Ereigniszeitpunkte 125, 126 entsprechende zweite Zielwerte für den Steuerungsparameter zu definieren. Die durch den äußeren Regelkreis 191 definierten zweiten Zielwerte für den Steuerungsparameter sind hierbei auf den jeweils vorliegenden Betriebszustand A, B, C bzw. den entsprechend vorhergesagten Ereigniszeitpunkten 125, 126 abgestimmt. Unter Berücksichtigung des durch den äußeren Regelkreis 191 generierten zweiten Zielwert des Steuerungsparameters kann die Steuerung der Handwerkzeugmaschine 100 optimal auf den jeweils vorliegenden Betriebszustand A, B, C bzw. den entsprechenden vorhergesagten Ereigniszeitpunkten 125, 126 angepasst werden.

Der durch den Regelkreis 191 generierte zweiten Zielwert für den Steuerungsparameter wird darauffolgend dem inneren Regelkreis 193 bereitgestellt.

Erfindungsgemäß ist der innere Regelkreis 193 nun eingerichtet, unter Berücksichtigung des in der Nutzereingabe 173 durch den Nutzer bereitgestellten ersten Zielwerts für den Steuerungsparameter und den weiteren durch den äußeren Regelkreis 191 unter Berücksichtigung des vorliegenden Betriebszustands A, B, C bzw. des vorhergesagten Ereigniszeitpunkts 125, 126 bereitgestellten zweiten Zielwerts für den Steuerungsparameter einen Ausgabezielwert zu berechnen und basierend auf dem Ausgabezielwert die Aktorik 195 der Handwerkzeugmaschine 100 anzusteuern.

Der Ausgabezielwert kann hierbei durch den inneren Regelkreis 193 beispielsweise als ein Produkt aus dem ersten Zielwert der Nutzereingabe 173 und dem zweiten Zielwert des äußeren Regelkreis 191 berechnet werden. Durch das Produkt aus den und ersten und zweiten Zielwerten kann der erste Zielwert der Nutzreingabe 173 somit durch den zweiten Zielwert des äußeren Regelkreises 191, der in Bezug auf den vorliegenden Betriebszustand A, B, C bzw. dem vorhergesagten Ereigniszeitpunkt 125, 126 ermittelt wurden, sensitiviert, sprich auf den jeweiligen Betriebszustand A, B, C bzw. zu erwartenden Ereigniszeitpunkt 125, 126 angepasst werden. Alternativ kann der Ausgabezielwert als ein Minimalwert bzw. Maximalwert der ersten und zweiten Zielwerte definiert werden. Hierdurch kann der Ausgabeziel als der Wert der ersten und zweiten Zielwerte definiert werden, der am besten zu dem jeweils ermittelten Betriebszustand A, B, C passt.

Alternativ kann der Ausgabezielwert durch den ersten Zielwert der Nutzreingabe 173 definiert sein, falls der zweite Zielwert des äußeren Regelkreises 191 kleiner als ein vordefinierter Schwellenwert ist, und als ein vordefinierter Zielwert definiert sein, falls der zweite Zielwert größer oder gleich dem vordefinierter Schwellenwert ist. Der vordefinierte Zielwert kann hierbei als ein konstanter Wert des Steuerungsparameters gegeben sein, der beispielsweise bei einer Voreinstellung der Handwerkzeugmaschine 100 auf den jeweils vorliegenden Betriebszustand A, B, C bzw. vorausliegendem Ereigniszeitpunkt 125, 126 angepasst wurde. Der vordefinierte Schwellenwert kann beispielsweise empirisch durch entsprechenden Messungen an die jeweils auftretenden Betriebszustände A, B, C und mögliche zweite Zielwerte angepasst sein.

Alternativ kann der Ausgabezielwert als ein Produkt des ersten Zielwerts der Nutzereingabe 173 mit einem ersten vordefinierten Zielwert definiert sein, falls der zweite Zielwert des äußeren Regelkreis 191 kleiner als ein vordefinierter Schwellenwert ist, und als ein Produkt aus dem ersten Zielwert der Nutzereingabe 173 und einem zweiten vordefinierten Zielwert definiert sein, falls der zweite Zielwert des äußeren Regelkreises 191 größer oder gleich dem vordefinierten Schwellenwert ist. In Abhängigkeit des durch den äußeren Regelkreises 191 ermittelten zweiten Zielwerts kann somit der erste Zielwert der Nutzereingabe 173 in Form der ersten und zweiten vordefinierten Zielwerte, die jeweils als konstante Werte des Steuerungsparameters definiert und auf die jeweils vorliegenden Betriebszustände bzw. zu erwartenden Ereigniszeitpunkte angepasst sein können, auf den jeweils vorliegenden Betriebszustand A, B, C bzw. zu erwartenden Ereigniszeitpunkt 125, 126 sensitiviert bzw. angepasst werden. Die ersten und zweiten vordefinierten Zielwerte und vordefinierten Schwellenwerte können wiederum empirisch für mögliche Betriebszustände A, B, C bestimmt sein.

In Form des durch den inneren Regelkreis 193 ermittelten Ausgabezielwerts kann die Handwerkzeugmaschine 100 somit unter Berücksichtigung der durch den Nutzer der Handwerkzeugmaschine 100 getätigten Nutzereingabe 173 und dem entsprechenden ersten Zielwert des Steuerungsparameters und unter Berücksichtigung des in Bezug auf den vorliegenden Betriebszustand A, B, C bzw. dem zu erwartenden Ereigniszeitpunkt 125, 126 ermittelten zweiten Zielwert des Steuerungsparameters angesteuert werden.

In der Ausführungsform der Figuren 3 und 4, in der die Handwerkzeugmaschine 100 als Schrauber ausgebildet ist, und in der ein Schraubfall beschrieben wird, bei dem eine selbstschneidende Schraube 169 in ein Holzwerkstück 137 eingeschraubt wird, und in der die verschiedenen Betriebszustände A, B, C das Einschrauben der Schraube 169 in das Werkstück 137 im Betriebszustand A, das Einschrauben des kegelförmigen Schraubenkopfes 170 in das Werkstück 137 im Betriebszustand B und das ebene Abschließen des Schraubenkopfes 170 mit der Oberfläche 167 des Werkstücks 137 im Betriebszustand C beschreiben, kann der Steuerungsparameter beispielsweise eine Drehzahl des Motors 101 der Handwerkzeugmaschine 100 sein.

Die Nutzereingabe 173 kann beispielsweise Signale des durch den Nutzer betätigten Auslöseschalters 109 umfassen, mittels denen der jeweilige erste Zielwert der Motordrehzahl definiert wird.

Die in den Sensormessungen 175 ermittelte Betriebsgröße 119 kann beispielsweise durch den Motorstrom I des Motors 101 der Handwerkzeugmaschine 100 gegeben sein.

Das Zustandsbestimmungsmodul 107, das gemäß der Modellinferenz 183 auf die Messwerte des Motorstroms I angewendet wird, kann entsprechend eingerichtet sein, basierend auf dem Motorstrom I, gemäß der Grafik A der Figur 3, die verschiedenen Betriebszustände A, B, C zu ermitteln. Ferner kann das Zustandsbestimmungsmodul 107 eingerichtet sein, basierend auf den Messwerten 121 die jeweiligen Ereigniszeitpunkte 125, 126 vorherzusagen.

Im Folgenden werden die oben beschriebenen Vorgänge und insbesondere das Ermitteln des zweiten Zielwerts durch den äußeren Regelkreis 191 bzw. das Ermitteln des Ausgabezielwerts durch den inneren Regelkreis 193 an einem Anwendungsfall beschrieben, in dem gemäß den Ausführungsformen zu den Fig. 3 und 4 die Handwerkzeugmaschine 100 als Schrauber ausgebildet ist und durch diesen eine Schraube 169 in ein Werkstück 137 eingeschraubt wird.

Die auf der Betätigung des Auslöseschalters 109 basierende Nutzereingabe 173 kann als ersten Zielwert beispielsweise einen entsprechend hohen Wert der Motordrehzahl definieren. Basierend auf den Sensormessungen 175 des Motorstroms ermittelt das Zustandsbestimmungsmodul 107 hingegen, dass die Handwerkzeugmaschine 100 sich bereits im Betriebszustand C der Grafik 3 befindet, in der der Flush-Point bereits erreicht ist und ein Abschluss des Schraubenkopfes 170 mit der Oberfläche 167 des Werkstücks 137 erzielt ist. Hierauf basierend berechnet der äußere Regelkreis 191 als zweiten Zielwert einen wesentlichen geringeren Wert für die Motordrehzahl, um eine Beschädigung der Schraube bzw. des Werkstücks 137, die bei der hohen Motordrehzahl der Nutzereingabe 173 zu befürchten wären, zu verhindern. Durch die Ermittlung des Ausgabezielwerts durch den inneren Regelkreis 193 kann somit der offensichtlich zu hohe Zielwert für die Motordrehzahl der Nutzereingabe 173 durch den durch den äußeren Regelkreis 191 berechneten wesentlich geringeren zweiten Zielwert für den die Motordrehzahl herabgeregelt werden, um somit die Handwerkzeugmaschine 100 entsprechend dem vorliegenden Betriebszustand C anzusteuern und gegebenenfalls abzuschalten.

Hierzu kann der zweite Zielwert wie auch die ersten und zweiten vordefinierten Zielwerte den Zahlenwert 0 nehmen. Es kann der Ausgabezielwert ebenfalls auf den Zahlenwert 0 herabgeregelt werden, wodurch die Handwerkzeugmaschine 100 zum Stillstand gebracht werden kann.

In der gezeigten Ausführungsform kann die Information der Modellinferenz 183 ferner in einer Statusanzeige 189 angezeigt werden.

Darüber hinaus kann die Modellinferenz einem Reset-Vorgang unterzogen werden, in dem die Modellausführungen auf einen Ausganswert zurückgesetzt werden. Dies kann beispielweise bei separaten Schraubvorgängen vorgenommen werden. Beispielsweise kann für jeden neuen Schraubvorgang, bei dem eine individuelle Schraube in ein Werkstück 137 eingeschraubt- bzw. aus diesem ausgeschraubt wird, das Zustandsbestimmungsmodul 107 resettet werden. Alternativ oder zusätzlich kann ein Resett auch beim Ein- oder Ausschalten der Handwerkzeugmaschine 100 ausgeführt werden.

Hierzu wird zunächst basierend auf den Sensormessungen 175 eine Reset-Vorverarbeitung 181 durchgeführt und hierauf basierend eine Resett-Entscheidung 185 bewirkt. Die Reset-Entscheidung 185 kann ferner unter Berücksichtigung der Ergebnisse der Modellinferenz 183 bewirkt werden.

Die Informationen der Modellinferenz 183 und Nachverarbeitung 187 können in digitaler oder quasi analoger Form bereitgestellt werden.

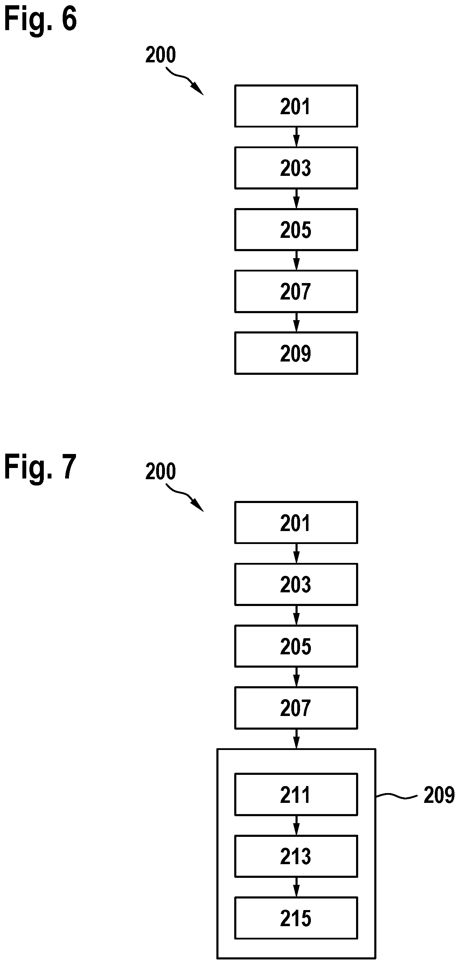

Fig. 6 zeigt ein Flussdiagramm eines Verfahrens 200 zum Steuern einer Handwerkzeugmaschine 100 gemäß einer Ausführungsform.

Zum Steuern der Handwerkzeugmaschine 100 werden in einem ersten Verfahrensschritt 201 zunächst Sensordaten wenigstens einer Betriebsgröße 119 der Handwerkzeugmaschine 100 empfangen. Die Betriebsgröße 119 kann hierbei beispielsweise ein Motorstrom, ein Motorpositionswinkel, eine Motordrehgeschwindigkeit, eine Spannung einer Spannungsquelle, Messwerte einer Bewegung bzw. Vibration der Handwerkzeugmaschine 100, oder ähnliche Parameter umfassen, an denen ein Betriebszustand A, B, C der Handwerkzeugmaschine 100 ermittelt werden kann.

In einem weiteren Verfahrensschritt 203 wird darauf basierend ein auf einer Nutzereingabe 173 eines Nutzers der Handwerkzeugmaschine 100 basierender Eingabewert für einen Steuerungsparameter der Handwerkzeugmaschine 100 empfangen. Der Steuerungsparameter kann hierbei beispielsweise eine Motordrehzahl, ein Motorstrom, eine Motorleistung, eine Betätigung des Auslöseschalters 109, eine Eingabe bzgl. eines Betriebsmodus, beispielsweise Einschalten bzw. Einschalten des Schlagmodus oder Meißelmodus, eine Drehrichtung des Motors 101, beispielsweise zum Ein- oder Ausschrauben einer Schraube 169, oder ähnliche Steuerungsparameter umfassen.

In einem weiteren Verfahrensschritt 205 wird basierend auf den Sensordaten der Betriebsgröße 119 und dem Eingabewert der Nutzereingabe 173 bzgl. des Steuerungsparameters ein erster Zielwert des Steuerungsparameters ermittelt.

In einem weiteren Verfahrensschritt 207 wird ein Zustandsbestimmungsmodul 107 ausgeführt und auf die Sensordaten der Betriebsgröße 119 angewendet. Durch das Ausführen des Zustandsbestimmungsmoduls 107 wird ein Betriebszustand A, B, C der Handwerkzeugmaschine 100 ermittelt. Das Ermitteln des Betriebszustands kann hierbei ein Vorhersagen eines Ereigniszeitpunkts 125, 126 umfassen, in dem ein Übergang zwischen zwei Betriebszuständen A, B, C erfolgt. Die Betriebszustände A, B, C können hierbei Lastbereiche umfassen, in denen die Handwerkzeugmaschine 100 betrieben wird, Stärken von Vibrationen oder Bewegungen der Handwerkzeugmaschine 100 und/oder des zu bearbeitenden Werkstücks 167, Temperaturen innerhalb der Handwerkzeugmaschine 100 und/oder am Werkstück 167, verschiedene Betriebsmodi, in denen die Handwerkzeugmaschine 100 betrieben wird, Arbeitsfortschritte der Handwerkzeugmaschine 100, Materialien der zu bearbeitenden Werkstück 137 oder beispielsweise das bereits beschriebene Vorliegen eines Formschlusses zwischen der Handwerkzeugmaschine 100 und dem bearbeiteten Werkstück 137, bei dem ein ebener Abschluss eines Schraubenkopfs 170 einer einzuschraubenden Schraube 169 mit einer Oberfläche 167 des Werkstücks 137 vorliegt, umfassen. Alternativ sind andere und zusätzliche Betriebszustände der Handwerkzeugmaschine 100 denkbar, die über die Analyse der messbaren Betriebsgrößen 119 der Handwerkzeugmaschine 100 detektiert werden können.

In einem weiteren Verfahrensschritt 209 wird basierend auf dem ersten Zielwert der Nutzereingabe 173 und unter Berücksichtigung des ermittelten Betriebszustands A, B, C, in dem sich die Handwerkzeugmaschine 100 befindet, eine Steuerung der Handwerkzeugmaschine 100 bewirkt. Wie oben bereits beschrieben kann hierzu eine Anpassung des ersten Zielwerts des Steuerungsparameters der Nutzereingabe 173 an den vorliegenden Betriebszustand A, B, C erfolgen, um eine an den jeweils vorliegenden Betriebszustand A, B, C angepasst Steuerung zu erreichen.

Das Steuern 209 kann hierbei beispielsweise das Anpassen einer Motordrehzahl, eines Motordrehmoments oder eine anderen Steuerungsparameters umfassen.

Fig. 7 zeigt ein weiteres Flussdiagramm des Verfahrens 200 zum Steuern einer Handwerkzeugmaschine 100 gemäß einer weiteren Ausführungsform.

Die Ausführungsform in Fig. 7 basiert auf der Ausführungsform in Fig. 6 und das Verfahren 100 umfasst alle dort gezeigten Verfahrensschritte.

In der gezeigten Ausführungsform wird zum Steuern 209 der Handwerkzeugmaschine 100 zunächst ein Verfahrensschritt 211 ausgeführt.

Im Verfahrensschritt 211 wird basierend auf dem ermittelten Betriebszustand A, B, C bzw. vorhergesagten Ereigniszeitpunkt 125, 126 der Handwerkzeugmaschine 100 ein zweiter Zielwert des Steuerungsparameters ermittelt. Wie zu Fig. 5 beschrieben, kann die Ermittlung des zweiten Zielwerts durch den äußeren Regelkreis 191 erfolgen. Die Ermittlung des zweiten Zielwerts kann hierbei eine Berechnung des zweiten Zielwerts umfassen, in der während der Ausführung und bei Erkennen des jeweils vorliegenden Betriebszustands A, B, C bzw. bei Vorhersagen des zu erwartenden Ereigniszeitpunkts 125, 126 ein entsprechender zweiter Zielwert berechnet wird. Alternativ hierzu kann das Ermitteln das Auslesen eines entsprechenden zweiten Zielwerts aus einer Look-Up-Tabelle umfassen, in der für verschiedene mögliche Betriebszustände A, B, C bzw. vorhergesagte Ereigniszeitpunkte 125, 126 passende zweite Zielwerte vorgespeichert sind. Alternativ kann auch das Zustandsbestimmungsmodul 107 eingerichtet sein, basierend auf dem ermittelten Betriebszustand A, B, C entsprechend angepasste zweite Zielwerte des Steuerungsparameters zu ermitteln.

In einem weiteren Verfahrensschritt 213 wird ein Ausgabezielwert des Steuerungsparameters basierend auf dem ersten Zielwert und dem zweiten Zielwert ermittelt. Wie zu Fig. 5 bereits erläutert, wird die Ermittlung des Ausgabezielwerts durch den inneren Regelkreis 193 bewirkt. Das Ermitteln kann wiederum ein Berechnen eines entsprechenden Ausgabezielwerts basierend auf den ersten und zweiten Zielwerten umfassen. Alternativ kann ein entsprechender Ausgabezielwert aus einer dafür vorgespeicherten Look-Up-Tabelle ausgelesen werden. Alternativ kann auch das Zustandsbestimmungsmodul 107 wiederum eingerichtet sein, basierend auf den ersten und zweiten Zielwerten den Ausgabezielwerte des Steuerungsparameters zu ermitteln.

In einem weiteren Verfahrensschritt 213 wird der Ausgabezielwert an einer Aktorik 195 der Antriebssteuerung 197 der Handwerkzeugmaschine 100 zum Steuern der Handwerkzeugmaschine 100 ausgegeben.

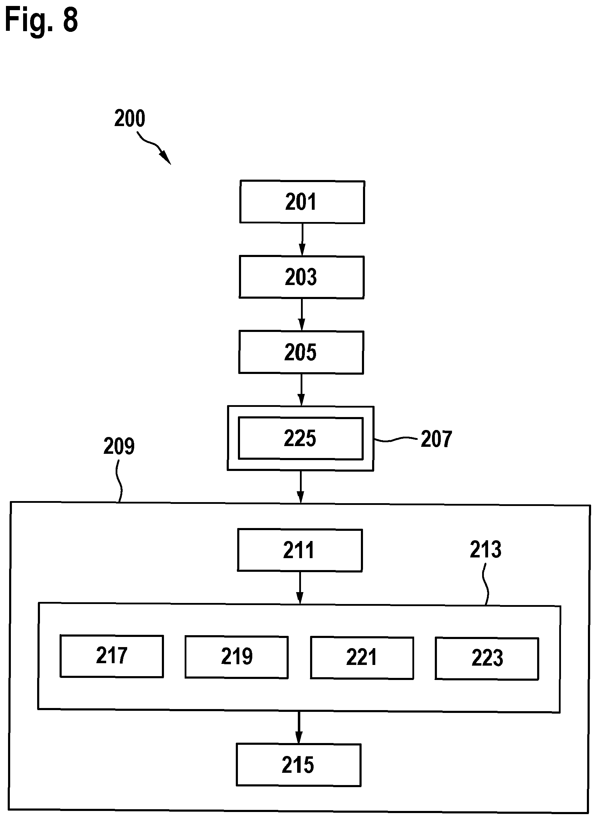

Fig. 8 zeigt ein weiteres Flussdiagramm des Verfahrens 200 zum Steuern einer Handwerkzeugmaschine 100 gemäß einer weiteren Ausführungsform.

Die gezeigte Ausführungsform basiert auf der Ausführungsform in Fig. 7 und umfasst alle dort beschriebenen Verfahrensschritte.

In der gezeigten Ausführungsform umfasst das Ermitteln 207 des Betriebszustands A, B, C ferner ein Vorhersagen 225 eines Ereigniszeitpunkts 125, 126, an dem ein Übergang zwischen verschiedenen Betriebszuständen A, B, C erfolgt.

Ferner umfasst das Ermitteln 213 des Ausgabezielwerts einen Verfahrensschritt 217. Im Verfahrensschritt 225 wird der Ausgabezielwert als ein Minimalwert oder ein Maximalwert der ersten und zweiten Zielwerte definiert.

Ferner umfasst der Verfahrensschritt 213 einen Verfahrensschritt 219. Im Verfahrensschritt 219 wird der Ausgabezielwert als der erste Zielwert definiert, falls der zweite Zielwert kleiner als ein vordefinierter Schwellenwert ist. Ist der zweite Zielwert größer oder gleich dem vordefinierten Schwellenwert, wird der Ausgabezielwert als ein vordefinierter Zielwert definiert.

In einem Verfahrensschritt 221 wird der Ausgabezielwert als ein Produkt zwischen den ersten und zweiten Zielwerten definiert.

In einem Verfahrensschritt 223 wird der Ausgabezielwert als ein Produkt zwischen dem ersten Zielwert und einem ersten vordefinierten Zielwert definiert, falls der zweite Zielwert kleiner als ein vordefinierter Schwellenwert ist. Ist der zweite Zielwert größer oder gleich dem vordefinierten Schwellenwert, wird der Ausgabezielwert als ein Produkt zwischen dem ersten Zielwert und einem zweiten vordefinierten Zielwert definiert.

Die vordefinierten Zielwerte können hierbei als konstante Werte des Steuerungsparameters ausgebildet und vorgespeichert sein. Die entsprechenden Schwellenwerte können ebenfalls vorgespeichert sein. Die definierten Zielwerte wie auch die vordefinierten Schwellenwerte können auf einen optimierten Betrieb der Handwerkzeugmaschine 100 für die jeweils vorliegenden Betriebszustände A, B, C bzw. vorausliegenden Ereigniszeitpunkte 125, 126 optimiert sein.

Wie bereits zu Fig. 5 erläutert, wird das Ermitteln 213 des Ausgabezielwerts in der gezeigten Ausführungsform durch den inneren Regelkreis 193 bewirkt. Die vordefinierten Zielwerte wie auch der zweite Zielwert, der durch den äußeren Regelkreis 191 ermittelt wird, können den Zahlenwert 0 annehmen. Hierdurch kann je nach Wahl des Steuerungsparameters ein Abschalten der Handwerkzeugmaschine 100 bewirkt werden.

Durch die Berücksichtigung der vordefinierten Zielwerte bzw. des zweiten Zielwerts gemäß den beschriebenen Verfahrensschritten 215 bis 221 kann eine Anpassung des ersten Zielwerts des Steuerungsparameters, der auf der Nutzereingabe 173 durch den Nutzer basiert, an den jeweils vorliegenden Betriebszustand A, B, C bzw. den zu erwartenden Ereigniszeitpunkt 125, 126 angepasst werden.

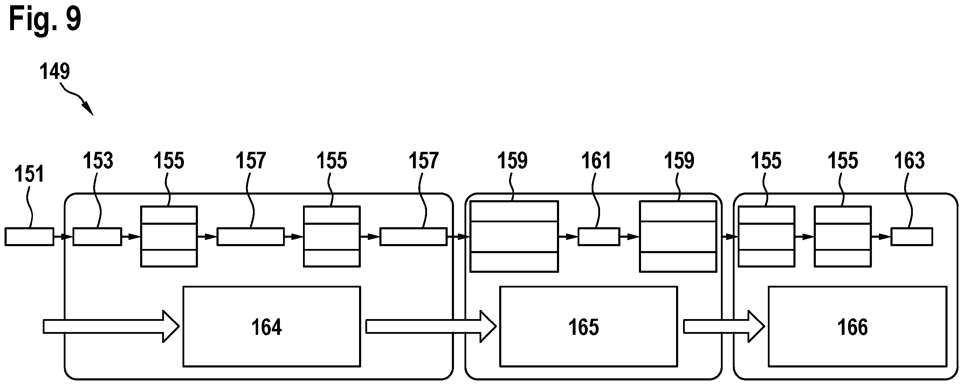

Fig. 9 zeigt eine schematische Darstellung einer künstlichen Intelligenz 149, die eingerichtet ist, in einer Steuerung der Handwerkzeugmaschine 100 eingesetzt zu werden.

Das Zustandsbestimmungsmodul 107 kann eine entsprechend trainierte künstliche Intelligenz 149 umfassen, die darauf trainiert ist, basierend auf Messwerten der Betriebsgröße 119 vorliegende Betriebszustände A, B, C zu ermitteln bzw. Ereigniszeitpunkte 125, 126 vorherzusagen. Das Zustandsbestimmungsmodul 107 kann ferner dazu ausgebildet sein, zweite Zielwerte bzw. Ausgabezielwerte zu ermitteln.

Fig. 9 zeigt eine Ausführungsform einer solchen künstlichen Intelligenz 149, die zum Ermitteln von Betriebszuständen A, B, C bzw. Vorhersagen von Ereigniszeitpunkten 125, 126 verwendbar ist.

In der gezeigten Ausführungsform ist die künstliche Intelligenz 149 als ein künstliches neuronales Netz und insbesondere als ein Long-Short-Term-Memory LSTM-Netz ausgebildet.

In der gezeigten Ausführungsform umfasst das künstliche neuronale Netz ein Inputlayer 153 zur Aufnahme von Eingangsdaten 151. Die Eingangsdaten können die Sensordaten der Betriebsgröße 119 in einer entsprechend vorverarbeiteten Form umfassen.

Ferner umfasst das künstliche neuronale Netz zwei Dense-Layer 155 und zwei Pooling-Layer 157, die in abwechselnder Form nacheinander angeordnet sind. Darüber hinaus umfasst das künstliche neuronale Netz zwei Long-Short-Term-Memory-Layer 159 zwischen dem ein Dropout-Layer 161 angeordnet ist. Abschießend umfasst das künstliche neuronale Netz ferner wiederum zwei Denzlayer und ein Outputlayer 163.

In der Datenverarbeitung erfolgt zunächst durch das Inputlayer 153, die ersten zwei Dense-Layer 155 und die zwei Pooling- Layer 157 ein Downsampling 164. Die beiden folgenden LSTM-Layer 159 und das zwischengeordnete Dropout-Layer 161 bewirken eine Merkmalsextraktion 165. Die beiden letzten Dense-Layer 155 und das Output-Layer 163 ermöglichen eine Vorhersage 166.

Abweichend von der gezeigten Ausführungsform kann die verwendete künstliche Intelligenz 149 auch in einer anderen Modellarchitektur strukturiert werden, die in der Lage ist, auf Basis einer Zeitreihe 123 von Messwerten 121 der Betriebsgröße 119 eine Regression oder Klassifikation durchzuführen. Eine Voraussetzung für die verwendete Modellarchitektur der künstlichen Intelligenz 149 ist hingegen, dass das jeweilige Modell in einem Format bereitgestellt werden kann, das auf einem Microcontroller einer Handwerkzeugmaschine 100 ausgeführt werden kann.

Für die hier beschriebene Ausführungsform kann ein Tensorflow/Keras-Model mit der nachfolgend abgebildeten Architektur genutzt werden. Nach Abschluss des Trainings kann das Modell zuerst in das Tensorflow-Lite Format konvertiert werden, welches wiederum mit Hilfe eines TVM Converters in C-Code für den Microcontroller übersetzt werden kann.

Die drei Eingangskanäle können beispielsweise der Motorstrom I des Motors 101, die Trigger-Spannung des Auslöseschalters 109 sowie die MotorUmdrehungen pro Sekunde sein.

Die verwendete Architektur kann wie folgt aufgebaut sein:

| Schicht (Typ) | Ausgabe Form | Parameter Anzahl |
|---|---|---|
| denseG0_8 (Dense) | (None, None, 8) | 32 |
| pool0_4 (AveragePooling1D) | (None, None, 8) | 0 |
| denseG1_16 (Dense) | (None, None, 16) | 114 |
| pool1_4 (AveragePooling1D) | (None, None, 16) | 0 |
| Istm0_32 (LSTM) | (None, None, 32) | 2272 |
| dropout0_0.25 (Dropout) | (None, None, 32) | 0 |
| Istm1_8 (LSTM) | (None, None, 8) | 1312 |
| denseG2_4 (Dense) | (None, None, 4) | 36 |
| dense0_1 (Dense) | (None, None, 1) | 5 |

| | | |
|---|---|---|
| Absolute Anzahl der verwendeten Parameter: 7,801 Davon trainierbare Parameter: 7,801 nicht-trainierbare Parameter: 0 | | |

Das erste Dense-Layer 155 kann mit einem 6X8 Kernel und einem 8 Bias ausgebildet sein. Das zweite Dense-Layer 155 kann mit einem 8X16 Kernel und einem 16 Bias ausgebildet sein. Das erste LSTM-Layer 159 kann mit einem 16X128 Kernel, einem 32X128 Recurrent Kernel und einem 128 Bias ausgebildet sein. Das zweite LSTM-Layer 159 kann mit einem 32X32 Kernel, einem 8X32 Recurrent Kernel und einem 32 Bias ausgebildet sein. Das dritte Dense-Layer 155 kann mit einem 8X4 Kernel und einem 4 Bias ausgebildet sein. Das vierte Dense Layer 155 kann mit einem 4X1 Kernel und einem 1 Bias ausgebildet sein.

Die Dense-Layer 155 und die LSTM Layer 159 können mit einer TanH Aktivierungsfunktion ausgebildet sein.

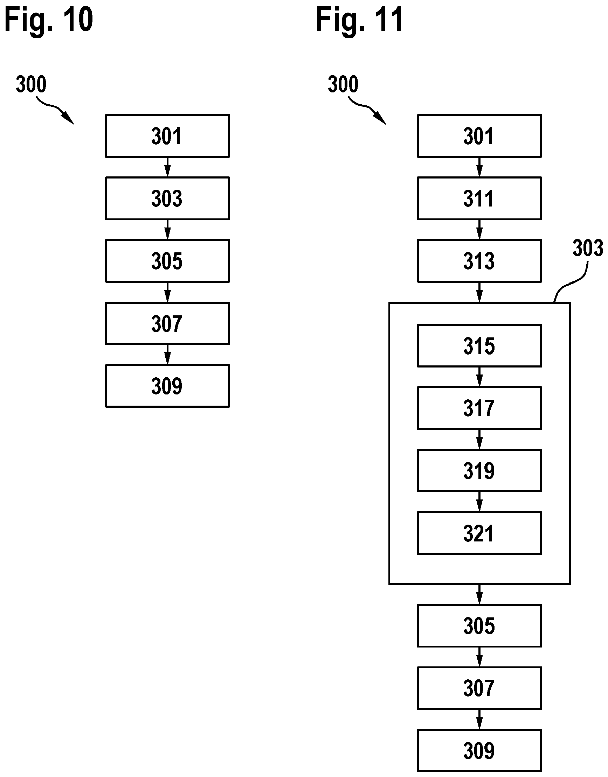

Fig. 10 zeigt ein Flussdiagramm eines Verfahrens 300 zum Erzeugen eines Trainingsdatensatzes für ein Training einer künstlichen Intelligenz 149 gemäß einer Ausführungsform.

Zum Trainieren der künstlichen Intelligenz 149 wird erfindungsgemäße zunächst ein Trainingsdatensatz generiert. Hierzu wird gemäß dem erfindungsgemäßen Verfahren 300 in einem Verfahrensschritt 301 zunächst eine Mehrzahl von Messwerten 121 der Betriebsgröße 119 der Handwerkzeugmaschine 100 bereitgestellt. Die Messwerte 121 weisen hier jeweils Zeitstempel auf, die Zeitpunkte definieren, an denen die Messwerte 121 aufgenommen wurden. Die Messwerte 121 können hierbei während des Betriebs der Handwerkzeugmaschine 100 aufgenommen sein. Alternativ hierzu können die Messwerte 121 während des Betriebs einer Mehrzahl verschiedener Handwerkzeugmaschine 100 des gleichen Typs aufgenommen worden sein. Die Messwerte 121 der Betriebsgröße 123 können durch die Mehrzahl verschiedener Handwerkzeugmaschine 100 aufgezeichnet und beispielsweise an eine für das Erzeugen eines Trainingsdatensatzes vorgesehene Serverarchitektur übermittelt werden. Diese kann eine entsprechende Aufbereitung der Messdaten und Archivierung der Messdaten vornehmen, um hierauf basierend einen entsprechenden Trainingsdatensatz zu erzeugen.

Hierzu wird in einem weiteren Verfahrensschritt 303 innerhalb der Mehrzahl von Messdaten 121 ein Ereigniszeitpunkt 125 identifiziert, an dem ein Betriebszustandsübergang zwischen zwei Betriebszuständen A, B, C erfolgt. Die Identifizierung des Ereigniszeitpunkts 125 wird hierbei basierend auf den Zeitstempeln der einzelnen Messwerte 121 durchgeführt.

In einem weiteren Verfahrensschritt 305 werden die Messwerte 121 mit Labelwerten versehen, die geeignet sind, den jeweiligen Messwert einem Betriebszustand A, B, C zuzuordnen oder diesen mit dem jeweiligen Ereigniszeitpunkt 125, 126 zu kennzeichnen. Das Versehen der Labelwerte kann beispielsweise durch entsprechend dafür vorgesehene und aus dem Stand der Technik bekannte Algorithmen zum Labeln von Trainingsdaten für künstliche Intelligenzen 149 ausgeführt werden. Alternativ kann ein Labeln der Messwerte 121 manuell durch entsprechend geschultes Personal ausgeführt werden. Alternativ können die automatisch per Algorithmus gelabelten Messwerte durch ein entsprechend geschultes Personal auf die richtige und fehlerfreie Labelung kontrolliert werden.

In einem weiteren Verfahrensschritt 307 werden die gelabelten Messwerte 121 der Betriebsgröße 119 in einer Zeitreihe 123 angeordnet. Dies erfolgt basierend auf den Zeitstempeln. Die Zeitreihe 123 beschreibt hierbei eine gemäß den Zeitstempeln zeitliche Anordnung der gelabelten Messwerte 121.

Nach dem Verfahrensschritt 307 und noch vor einem weiteren Verfahrensschritt 309 kann eine Konsolidierung der Mehrzahl von vorhandenen Labels ausgeführt werden. Dies kann insbesondere anhand von statistischen Kriterien erfolgen. Beispielsweise kann durch Berechnung eines Medians des Ereigniszeitpunkts aus mehreren manuellen und automatischen Quellen eine robusteres Label für den tatsächlichen Ereigniszeitpunkt erstellt werden, wodurch eine höhere Genauigkeit des Zeitpunkt-Labels erreicht werden kann.

In dem weiteren Verfahrensschritt 309 wird die Zeitreihe 123 der gelabelten Messwerte 121 der Betriebsgröße 119 als entsprechender Trainingsdatensatz bereitgestellt.

Fig. 11 zeigt ein weiteres Flussdiagramm eines Verfahrens 300 zum Erzeugen eines Trainingsdatensatzes für ein Training einer künstlichen Intelligenz 149 gemäß einer weiteren Ausführungsform.

Die gezeigte Ausführungsform basiert auf der Ausführungsform in Fig. 10 und umfasst alle dort beschriebenen Verfahrensschritte.

In der gezeigten Ausführungsform wird zunächst in einem Verfahrensschritt 211 für jeden Messwert 121 der Betriebsgröße 119 ein Drehwinkel αᵣₒₜ des Motors 101 der Handwerkzeugmaschine 100 ermittelt. Hierzu werden durch entsprechende Drehwinkelsensoren 129 die Drehwinkel αᵣₒₜ des Motors 101 gemessen und basierend auf den Zeitstempeln der Messwerte 121 diesen zugeordnet. Die Drehwinkel αᵣₒₜ des Motors 101 beschreiben hierbei den Drehwinkel, den der Motor 101 zum Zeitpunkt der Aufnahme des jeweiligen Messwertes 121 der Betriebsgröße 119 aufwies.

In einem weiteren Verfahrensschritt 313 wird ein Rotationszeitpunkt tᵣₒₜ für jeden Messwert 121 der Betriebsgröße 119 unter Berücksichtigung einer zur Ausführung einer vollständigen Umdrehung des Motors 101 benötigten Zeitspanne und unter Berücksichtigung des Zeitstempels des jeweiligen Messwerts 121 berechnet. Der Rotationszeitpunkt tᵣₒₜ beschreibt hierbei den Zeitpunkt an dem ausgehend von dem Drehwinkel αᵣₒₜ des jeweiligen Messwerts 121 eine vollständige Umdrehung des Motors 101 erfolgt ist.

In der gezeigten Ausführungsform umfasst das Identifizieren 303 des Ereigniszeitpunkts 125, 126 ferner den Verfahrensschritt 315. In diesem Verfahrensschritt werden Sensordaten eines externen Sensors 171 empfangen. Die Sensordaten des externen Sensors 171 bilden hierbei den Betriebszustand A, B, C der Handwerkzeugmaschine 100 ab. Der externe Sensor 171 kann beispielsweise als ein Kamerasensor ausgebildet sein. Mittels der Kameradaten des Kamerasensors kann der Betriebszustand A, B, C, in dem sich die Handwerkzeugmaschine 100 zum Zeitpunkt der Aufnahme der Messwerte 121 der Betriebsgröße 119 befand, abgebildet werden. Wie in der Fig. 4 dargestellt, kann über den beispielsweise an der Handwerkzeugmaschine 100 ausgebildeten Kamerasensor 171 der Arbeitsfortschritt des Vorgangs des Einschraubens der Schraube 169 in das Werkstück 137 abgebildet bzw. verfolgt werden.

In einem weiteren Verfahrensschritt 317 wird der Ereigniszeitpunkt 125, 126 innerhalb einer Zeitreihe der Sensordaten des externen Sensors 171 ermittelt. Die Sensordaten des externen Sensors 171 werden hierzu gemäß ihren Zeitstempeln in einer Zeitreihe angeordnet. Durch Analyse der Bilddaten des Kamerasensors kann der exakte Zeitpunkt identifiziert werden, an dem beispielsweise der ebene Abschluss des Schraubenkopfes 170 mit der Oberfläche 167 des Werkstücks 137 erfolgt ist, wie dies in Figur 4 in dem Betriebszustand C gekennzeichnet ist. Durch die entsprechenden Zeitstempel der aufgenommenen Bilddaten des Kamerasensors 171 kann somit innerhalb der Zeitreihe der Bilddaten der exakte Zeitpunkt des Ereigniszeitpunktes 125 ermittelt, in dem der Übergang zwischen den in Figur 4 dargestellten Betriebszuständen B und C erfolgt ist und somit der ebene Abschluss zwischen dem Schraubenkopf 170 der Schraube 169 und der Oberfläche 167 des Werkstücks 137 erreicht ist.

In einem weiteren Verfahrensschritt 319 wird die Zeitreihe 123 der Messwerte 121 der Betriebsgröße 119 mit der Zeitreihe 123 der Sensordaten des externen Sensors 171 über die jeweiligen Zeitstempel der Messwerte 121 bzw. der Sensordaten des externen Sensors 171 synchronisiert.

In einem weiteren Verfahrensschritt 321 wird der Ereigniszeitpunkt 125, 126 in der Zeitreiche 123 der Messwerte 121 der Betriebsgröße 119 basierend auf den in der Zeitreihe der Sensordaten des externen Sensors 171 identifizierten Ereigniszeitpunkts 125, 126 identifiziert. Durch das Synchronisieren der Zeitreihe 123 der Messwerte 121 der Betriebsgröße 119, die beispielsweise durch den Motorstrom I des Motors 101 gegeben ist, und der Zeitreiche der Sensordaten des externen Sensors 171 kann jeder Messwert 121 der Betriebsgröße 119 ein zeitgleich aufgenommenes Bilddatum bzw. Sensordatum des externen Kamerasensors 171 zugeordnet werden.

In dem durch Inspektion bzw. Analyse der Bilddaten des externen Kamerasensors 171, beispielsweise durch ein entsprechend geschultes Personal, exakt die verschiedenen Betriebszustände A, B, C bzw. die verschiedenen Ereigniszeitpunkte 125, 126, die beispielsweise in Fig. 4 durch das Eindrehen der Schraube 169 in das Werkstück 137, das Eindrehen des Schraubenkopfes 170 in das Werkstück 137 und das ebene Abschließen des kegelförmigen Schraubenkopfes 170 mit der Oberfläche 167 des Werkstücks 137 beschrieben sind, kann in Folge der Synchronisation der beiden Zeitreihen, nämlich der Zeitreihe 123 der Messwerte 121 der Betriebsgröße 119 und der Zeitreihe des Sensorwerte des externen Sensors 171, jeder Messwert 121 einem Betriebszustand Handwerkzeugmaschine 100 zugeordnet werden.

Über den Vergleich der Bilddaten des externen Kamerasensors 171, in denen durch ein entsprechend geschultes Personal problemlos die verschiedenen Betriebszustände der Handwerkzeugmaschine 100 identifiziert werden können, und durch die Synchronisation der beiden Zeitreihen können die Messwerte 121 der Betriebsgröße 119 exakt den verschiedenen Betriebszuständen A, B, C zugeordnet werden.

Durch die Berücksichtigung der Sensordaten des externen Sensors 171 können somit Messwerte 121 der Betriebsgröße 119 exakt gelabelt werden und über die entsprechenden Label klar definierten Betriebszuständen zugeordnet werden. Dies kann insbesondere auch für Betriebsgrößen 119 vorgenommen werden, deren Verlauf die jeweils verschiedenen Betriebszustände A, B, C bzw. die vorliegenden Ereigniszeitpunkte 125, 126 nicht eindeutig offenbaren.

So kann durch die Berücksichtigung der Bilddaten des externen Kamerasensors 171 der Ausführungsform in Fig. 4 exakt den Messwerten 121 der Zeitreiche 123 des Verlaufs des Motorstroms I der Grafik A der Figur 3 die verschiedenen Betriebszustände A, B, C und die vorliegenden Ereigniszeitpunkte 125, 126 exakt bestimmt werden, der jeweilige in Grafik A der Figur 3 dargestellt Verlauf des Motorstroms I derart verschiedene Betriebszustände A, B, C bzw. Ereigniszeitpunkte 125, 126 nicht explizit darstellt.

Alternativ zu den beschriebenen Verfahrensschritten können zum Erzeugen des Trainingsdatensatzes weitere Schritte vorgenommen werden. Beispielsweise können die aufgenommenen Messwerte 121 der Betriebsgröße 119 bzw. die Sensordaten des externen Sensors 171 in Standardeinheiten konvertiert werden. Ferner können die Messwerte des Drehwinkels αᵣₒₜ vorbereinigt werden. Insbesondere wenn die Messwerte der Drehwinkel αᵣₒₜ über Hall-Sensoren aufgezeichnet wurden, kann die Möglichkeit eines Overflows der Hall-Sensordaten in Bezug auf den verwendeten Datentyp Unit 16 berücksichtigt werden.

Insbesondere können aufgenommene Drehwinkel αᵣₒₜ, für welche durch den kontinuierlichen Betrieb und Datentyp-bedingt ein Overflow auftreten kann, auf einen kontinuierlichen Wertebereich korrigiert werden. Dies kann vorteilhafterweise durch Verschieben der Winkelwerte auf den Anfangswert Null erreicht werden, wodurch der Drehwinkel zu jedem Zeitpunkt den Winkelfortschritt gegenüber dem Startpunkt (bspw. des Einschraubvorgangs) widerspiegelt.

Ferner können die Zeitreihen 123 der Messwerte 121 der Betriebsgröße 119 wie auch die Zeitreihe der Sensordaten des externen Sensors 171 auf die Zeitbereiche verkürzt werden, in denen der tatsächliche Betrieb der Handwerkzeugmaschine 100 erfolgt. Gemäß der in Fig. 4 dargestellten Ausführungsform können die Zeitreihen auf den tatsächlichen Verschraubungsfall beschränkt werden, in dem die Schraube 169 tatsächlich in das Werkstück 137 eingeschraubt wird. Messwerte, die vor Beginn des Schraubvorgangs und nach Beendigung des Schraubvorgangs aufgenommen wurden, können aus den Zeitreihen entfernt werden. Alternativ können auch alle Daten vor bzw. nach einem festgelegten Zeitpunkt vor bzw. nach dem gelabelten Ereigniszeitpunkt 125, 126 entfernt werden, um hierdurch die Zeitreihen 123 zu verkürzen und die Datenmengen zu verringern.

Ferner kann ein Runterskalieren einer Erfassungsrate der Aufnahme der Messwerte bzw. Sensordaten erfolgen. Darüber hinaus kann ein Filtern der aufgenommenen Messwerte bzw. Sensordaten bewirkt werden.

Ferner kann eine Merkmalsextraktion durchgeführt werden, um abgeleitete Sensorsignale zu erhalten, wie beispielsweise Vektorlängen der Beschleunigung, Vektorlängen der Drehrate aus einem Gyroskop, Motorumdrehungen pro Sekunde.

Darüber hinaus kann der Trainingsdatensatz wie im Maschinenlearning üblich in Trainingsdaten und Validierungsdaten bzw. Testdaten aufgeteilt werden. Die Aufteilung kann hierbei beispielsweise wie folgt erfolgen, 70 % Trainingsdaten, 20 % Testdaten und 10 % Validierungsdaten.

Im Zuge der Aufteilung der Daten in Trainings-, Validierungs- und Testdaten kann ein sogenannter Stratified Split durchgeführt werden.

Zum Nachweis der Generalisierung der Funktion über typische Betriebsbereiche hinweg kann jedoch vorteilhaft ein abweichender Split genutzt werden, insbesondere indem nur bestimmte Betriebsbereiche für das Training und andere für Validierung bzw. Test genutzt werden. In diesem Fall wird das Erreichen der gewünschten Generalisierung dadurch angezeigt, dass die Genauigkeit der Funktion auf dem Test-Datensatz nur unwesentlich schlechter ist als die Genauigkeit der Funktion im Test-Datensatz bei einem Stratified Split. Als geeignete Betriebsparameter können insbesondere Schraubenlängen, Drehzahl, Schraubenduchmesser, Art und Härte des Holzes sowie weitere Parameter der Anwendung genutzt werden.

Ferner können Normalisierungsparameter berechnet werden. Hierbei kann beispielsweise ein Min-Max-Scaling-Verfahren (Parameter pro Signal: Minimum, Maximum) oder ein Standardisierungsverfahren (Parameter pro Signal: Mittelwert und Standardabweichung) zum Einsatz kommen. Die Parameter können hierbei ausschließlich anhand des Trainingsdatensatzes berechnet werden. Hierbei bleibt zu berücksichtigen, dass die Normalisierungsparameter nicht in Abhängigkeit eines gewählten Paddings verfälscht werden.

Da in Abhängigkeit des ausgeführten Betriebs der Handwerkzeugmaschine 100, beispielsweise des in den Ausführungsformen der Figuren 3 und 4 beschriebenen Schraubfalls, die jeweiligen Zeitreihen 123 eine unterschiedliche Länge aufweisen können, da unterschiedlich lange Schraubfälle durchgeführt wurden, können die Trainingsdaten auf eine einheitliche Länge zusammengeschnitten werden. Dies ist erforderlich, da die Eingangsdaten der künstlichen Intelligenz ein einheitliches Datenformat aufweisen müssen. Hierbei kann weiter berücksichtigt werden, ob die derart gepaddeten Daten in allen Signalen eine 0 aufweisen, oder ob sie eine Kopie der ersten (Startpadding) bzw. letzten (Endpadding) realen Daten darstellen.

Bei der zu Figur 9 beschriebenen Architektur des neuronalen Netzes wird aufgrund der genutzten Netzarchitektur, bei welcher innerhalb des Netzes ein effektives Downsampling durch die Pooling-Layer erfolgt, zusätzlich mithilfe des Paddings sichergestellt, dass alle Zeitreihendaten durch den Gesamt-Pooling-Faktor Fp teilbar sind, der sich aus dem Produkt der einzelnen Pooling-Faktoren im Netzwerk ergibt.

Hierdurch kann sichergestellt werden, dass zu jeder Gruppe von Fp Samples eine eindeutige Zuordnung eines Labels des Ausgangswerts existiert. In der gezeigten geeigneten Netzwerkarchitektur ergibt sich aus den Pooling-Layern Fp=16.

Das Testdatenset kann hingegen ungepaddet verwendet werden, wobei für die letzten Samples typischerweise kein Ergebnis mehr berechnet werden kann.

Alternativ können Augmentierungstechniken ausgeführt werden, um hierüber neue Daten zu erzeugen, die prinzipiell echten Daten entsprechen. Hierüber können beispielsweise neue Zeitreihen von Daten der Betriebsgröße 119 generiert werden.

Abschließend kann eine Normalisierung auf Basis der zuvor berechneten Normalisierungsparameter (Standardisierung oder Mini-Max-Scaling) ausgeführt werden.

Neben der Ausführung als Kamerasensor kann der externe Sensor 271 beispielsweise auch als ein Mikrofon ausgebildet werden. Auch können mehrere externe Sensoren verwendet werden.

Die Datenerfassung kann auf unterschiedlichen Geräten, beispielsweise einem Microcontroller und einem Raspberry-Pi aufgezeichnet werden. Die Daten sowohl der Betriebsgröße 119 als auch die Daten des externen Sensors auf der Handwerkzeugmaschine 100 können aufgenommen und an die externe Serverarchitektur übertragen werden. Aufgrund der unterschiedlichen Samplerate zwischen den verschiedenen Sensoren 171 und den Sensoren zum Erfassen der Betriebsgröße 119 kann eine Vorverarbeitung der erfassten Daten notwendig sein. Hierbei können insbesondere Metadaten überprüft werden.

Das Labelling der Messwerte 121 kann als ein Ereignislabel ausgeführt sein, in dem jeder Messwert 121 ein entsprechender Zeitpunkt zugeordnet wird. Alternativ oder zusätzlich kann ein Zustandslabelling ausgeführt werden, in dem jeder Messwert 121 einem entsprechenden Zeitbereich zugeordnet wird.

Ferner können die Messwerte 121 der Betriebsgröße 119 und/oder die Sensordaten des externen Sensors 171 eines Sanity-Checks unterzogen werden, in dem die Fehlerfreiheit der jeweiligen Daten überprüft wird.

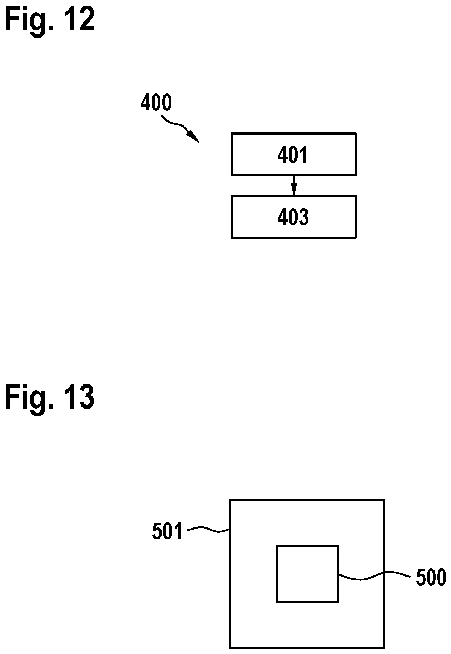

Fig. 12 zeigt ein Flussdiagramm eines Verfahrens 400 zum Trainieren einer künstlichen Intelligenz 149.

Zum Training der künstlichen Intelligenz 149 gemäß dem erfindungsgemäßen Verfahren 400 zum Trainieren einer künstlichen Intelligenz 149 zum Ermitteln eines Betriebszustands A, B, C eine Handwerkzeugmaschine 100 wird zunächst in einem Verfahrensschritt 401 ein gemäß dem Verfahren 300 nach einer der oben beschriebenen Ausführungsformen generierter Trainingsdatensatz bereitgestellt.

In einem Verfahrensschritt 403 wird eine Ausführung des Trainings der künstlichen Intelligenz 149 zum Ermitteln eines Betriebszustands A, B, C und/oder zum Vorhersagen eines Ereigniszeitpunkts 125, 126 einer Handwerkzeugmaschine 100 basierend auf dem Trainingsdatensatz ausgeführt. Das Training kann hierbei gemäß den aus dem Stand der Technik bekannten Trainingsmethoden erfolgten.

Experimentell hat sich für das Training der Modell-Architektur der künstlichen Intelligenz der zu Figur 9 beschriebenen Ausführungsform eine Batch Size von 16 als vorteilhaft erwiesen. Als Optimierungsalgorithmus kann der Adam-Algorithmus zu befriedigenden Ergebnissen führen. Spezifisch für den hier behandelten Anwendungsfall ist eine relativ geringe Learning Rate von 0.0001 ausreichend. Dadurch bedingt wird eine vergleichsweise hohe Anzahl an Trainingsepochen benötigt. Typischerweise muss im Vorfeld keine Obergrenze für die Anzahl der Epochen definiert werden, und das Training kann erst dann beendet werden, wenn mit Hilfe des Validierungsdatensatzes festgestellt wird, dass über längere Zeit keine Verbesserung des Modells mehr erzielt werden kann (sogenanntes Early Stopping). In einer für den hier behandelten Anwendungsfall vorteilhaften Trainingseinstellung wird diese "längere Zeit" als 300 Epochen definiert.

Da im Zuge der Entwicklung jedoch immer wieder beobachtet wird, dass Trainings für die gewählte Learning Rate relativ früh (~ nach weniger als 2000 Epochen) abgebrochen werden, und entsprechende Modelle eindeutig schlechter abschneiden, als Modelle, die über mehr Epochen trainiert wurden, wird das Early Stopping insofern erweitert, als dass eine minimale Anzahl an Epochen definiert werden kann. In der Folge wird üblicherweise ein Minimum von 2000 oder 1500 Epochen konfiguriert. Als Loss-Funktion wird die mittlere quadratische Abweichung (Mean Squared Error, MSE) genutzt.

Typischerweise ist es vorteilhaft, das Training zunächst mit einem Teil der Zeitreihendaten zu beginnen, bevor die gesamte Zeitreihe genutzt wird. Insbesondere kann der Bereich um einen kritischen (z.B. zu detektierenden) Punkt herum genutzt werden, um das grobe Verhalten des Modells anzutrainieren. Erst in einem weiteren Schritt (nach beispielsweise 10%-50% der gesamten Trainings-Epochen) wird dann die gesamte Zeitreihe genutzt, um das Modellverhalten auch in den zeitlich entfernteren Bereichen anzutrainieren.

Diese Herangehensweise ist besonders vorteilhaft, da hiermit die Wahrscheinlichkeit reduziert wird zu einem nicht-optimalen Trainingsergebnis zu kommen. Für typische Anwendungen von Schraubern und Bohrern kann ein Bereich von 0,1s bis 10s vor und nach dem Ereigniszeitpunkt genutzt werden, wobei sich 0,5s als besonders geeignet für den hier behandelten Anwendungsfall herausgestellt hat.

Um die Modellqualität nach Abschluss des Trainings beurteilen zu können, erfolgt zunächst eine automatisierte theoretische Evaluierung auf Basis eines Test-Datensatzes. Der Testdatensatz hat hierbei dieselben Vorverarbeitungsschritte durchlaufen, die auch zur Inferenzzeit auf dem Microcontroller ausgeführt werden. Diese umfassen wie oben beschrieben: Konvertierung in SI-Einheiten, Berechnung der Umdrehungen pro Sekunde auf Basis des Hall Sensor Signals, Normalisierung auf Grundlage der Normalisierungsparameter, die auf dem Trainingsdatensatz bestimmt werden.

Im Zuge der Evaluierung werden diese Daten, die den Daten im Live-Einsatz entsprachen, in das Modell eingespeist, um so das Verhalten des Modells zu analysieren. Da die Aktivierungsfunktion des Ausgabeneurons als Tangens Hyperbolicus (tanh) definiert ist, liegen die Outputs innerhalb des Wertebereichs [-1, 1]. Als Auslösezeitpunkt wird der Zeitpunkt innerhalb der Vorhersage-Zeitreihe betrachtet, zu dem erstmalig ein gesetzter Schwellenwert überschritten wird. Dieser kann bei 0, aber auch näher an -1 bzw.1 liegen, um die Auslöse-Empfindlichkeit anzupassen.

Die Anpassung des Schwellwerts kann dabei entweder vor Auslieferung festgelegt werden (Vorteil: Einheitliches Verhalten) oder in der Anwendung adaptierbar gehalten werden, z.B. durch einen Einstellregler. Dies hat den Vorteil, dass ein passenderes Verhalten für unterschiedliche Situationen auswählbar ist. Ein typischer fester Schwellwert liegt zwischen 0 und -1, wodurch eine frühere Auslösung erreicht wird und auftretende Verzögerungen durch die Prozessierung sowie Trägheit der Maschine kompensiert werden können. Als besonders geeigneter Wert hat sich -0,85 herausgestellt, um eine erhöhte Empfindlichkeit bei noch akzeptabler Wahrscheinlichkeit von Fehlauslösungen zu erreichen.

Für die zu den Figuren 3 und 4 beschriebene Ausführungsform werden vorrangig zwei anwendungsbezogene Metriken herangezogen, in denen zudem für jede Material-Schraube-Kombination differenziert betrachtet werden. Dabei handelte es sich um:
- Die durchschnittliche absolute Abweichung des Auslösezeitpunkts vom gewünschten (=gelabelten) Auslösezeitpunkt, gemessen in Motorumdrehungen. Ferner wird die relative Abweichung zum gewünschten Auslösezeitpunkt auch in Form einer Häufigkeitsverteilung betrachtet, da auf diese Weise ersichtlich ist, ob das Modell tendenziell zu früh oder zu spät auslöst, oder ob der Modalwert (wie erwünscht) bei 0 liegt.
- Die Anzahl bzw. der Anteil der Verschraubungen, bei denen das Modell zu keinem Zeitpunkt auslöste.
- Der MSE des Losses spielt eine untergeordnete Rolle, da für den realen Einsatz weniger die genaue Vorhersage für die gesamte Zeitreihe entscheidend ist, sondern vielmehr der Zeitpunkt des Auslösens von Bedeutung ist. Es hat sich allerdings gezeigt, dass der MSE zumeist mit den anwendungsbezogene Metriken korreliert.

Für eine als Schrauber ausgebildete Handwerkzeugmaschine 100 kann für das Training der künstlichen Intelligenz 149 des Zustandsbestimmungsmoduls 107 kann eine Mehrzahl von Kombinationen eines Schraubentyps der Schraube 169 und eines Materialtyps des jeweiligen Werkstücks 137 berücksichtigt werden.

Es können verschiedene Parameter berücksichtigt werden, die einen Einfluss auf die Güte des Trainings der künstlichen Intelligenz 149 und deren spätere Performanz im Ermitteln der Betriebszustände haben. Dazu gehören insbesondere Material (z.B. Holzart), Länge/Durchmesser/Steigung/Gewindeart der Schraube, Geschwindigkeit bei der Verschraubung, sowie Nutzer-Einflüsse wie Verkippung und aufgewendeter Druck. Da es praktisch unmöglich ist, für jede denkbare Kombination Daten, noch dazu in ausreichender Menge, aufzuzeichnen, ist es vorteilhaft ausgewählte Kombinationen von unterschiedlichen gängigen Schraubtypen mit einer Auswahl von Materialien unterschiedlicher Härte zu nutzen. Die Information über die verwendete Schraube-Material-Kombination können in Form von Metadaten gespeichert und im Training verwendet werden. Generell ist dabei zu achten, dass für jede Kombination eine ausreichende Anzahl von Aufzeichnungen (mindestens 25, besser mehr) durchgeführt wird. Ebenso ist es vorteilhaft, wenn von keiner Kombination deutlich mehr Verschraubungen genutzt werden als bei anderen Kombinationen, um letztlich eine ausgewogene Datengrundlage für das Kl-Training zu erhalten.

Im Folgenden wird ein Beispiel für mögliche Schraube-Holz-Kombinationen für den Anwendungsfall "Verschraubung in Holz" bereitgestellt.

Verwendet wurden Kombinationen von verschiedenen anwendungsrelevanten Holzarten (z.B. OSB, Kiefer, Buche, Fichte) und Schraubenarten mit typischen Durchmessern von 2mm bis 6mm, Längen von 20mm bis 100mm, Kopfformen für Torx oder Pozidrive sowie mit oder ohne selbstschneidende Gewinde. Hierbei müssen nicht für jede Abstufung und Kombination von Materialeigenschaften Aufzeichnungen vorhanden sein, soll jedoch eine ausreichende Breite an Abdeckung vorhanden sein. Eine Anzahl von 100 oder mehr Kombinationen hat sich als geeignet herausgestellt. Hierbei ist insbesondere zu vermeiden, dass ungewollte Korrelationen (bspw. zwischen Holzart und Schraubenart) in den Aufzeichnungen existieren, die nicht der Wirklichkeit in der Anwendung entsprechen.

Alternativ zu den oben beschriebenen Ausführungsformen kann das Zustandsbestimmungsmodul 107 auch eine anders ausgestaltete künstliche Intelligenz 149 oder eine Mehrzahl von künstlichen Intelligenzen 149 umfassen. Beispielsweise kann das Zustandsbestimmungsmodul 107 ein anders ausgebildetes künstliches neuronales Netz umfassen, beispielsweise ein Temporal Convolutional Network oder ein Covolutional Network. Alternativ kann das Zustandsbestimmungsmodul 107 auch Modelle wie Decision Tress oder Ensemble Modelle umfassen.

Das Zustandsbestimmungsmodul 107 kann insbesondere als ein Klassifikator ausgebildet und eingerichtet sein, durch Ausführung einer Klassifikation der einzelnem Messwerte 121 der Betriebsgröße 119 der Zeitreihe 123 durchzuführen, die einzelnen Messwerte 121 der Betriebsgröße 119 entsprechenden Betriebszuständen A, B, C zuzuordnen und hierüber die Ereigniszeitpunkte 125, 126 zu ermitteln oder vorherzusagen. Die Messwerte 121 der Betriebsgröße 119 können hierbei während des Betriebs der Handwerkzeugmaschine 100 gemäß eines Sliding Window durch das Zustandsbestimmungsmoduls 107 verarbeitet und gemäß der Klassifikation entsprechenden Betriebszuständen A, B, C zugeordnet werden. Gemäß einem Sliding Window werden die Zeitreihen 123 der aufgenommenen Messwerte 121 somit durch das Zustandsbestimmungsmodul 107 analysiert und hierdurch die Betriebszustände A, B, C ermittelt beziehungsweise die Ereigniszeitpunkte 125, 126 vorhergesagt.

Fig. 13 zeigt eine schematische Darstellung eines Computerprogrammprodukts 500, umfassend Befehle, die bei der Ausführung des Programms durch eine Datenverarbeitungseinheit diese veranlassen, das Verfahren 200 zum Steuern einer Handwerkzeugmaschine 100 nach einer der voranstehenden Ausführungsformen und/oder das Verfahren 300 zum Erzeugen eines Trainingsdatensatzes nach einer der voranstehenden Ausführungsformen und/oder das Verfahren 400 zum Trainieren einer künstlichen Intelligenz 149 und/oder die künstliche Intelligenz 149 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Verfahren (300) zum Erzeugen eines Trainingsdatensatzes für ein Training einer künstlichen Intelligenz (149) zum Ermitteln eines Betriebszustands (A, B, C) und/oder zum Vorhersagen eines Ereigniszeitpunkts (125, 126) einer Handwerkzeugmaschine (100), umfassend:
Bereitstellen (301) einer Mehrzahl von Messwerten (121) einer Betriebsgröße (119) einer Handwerkzeugmaschine (100), wobei die Messwerte jeweils mit Zeitstempeln versehen sind;
Identifizieren (303) eines Ereigniszeitpunkts (125) innerhalb der Mehrzahl von Messwerten (121), wobei der Ereigniszeitpunkt (125) einen Zeitpunkt definiert, an dem die Handwerkzeugmaschine (100) von einem ersten Betriebszustand (A) in einen zweiten Betriebszustand (B) übergeht;
Versehen (305) der Messwerte mit Labelwerten, die geeigneten sind, zu kennzeichnen, ob ein jeweiliger Messwert dem Ereigniszeitpunkt (125) und/oder dem Ereigniszeitbereich zugeordnet ist;
Anordnen (307) der Mehrzahl von gelabelten Messwerten (121) in einer Zeitreihe (123) basierend auf den Zeitstempeln der Messwerte; und
Bereitstellen (309) eines die Zeitreihe (123) von gelabelten Messwerten (121) der Betriebsgröße (119) umfassenden Trainingsdatensatzes.

2. Verfahren (300) nach Anspruch 1, ferner umfassend:
Ermitteln (311) eines Drehwinkels (αᵣₒₜ) eines Motors (101) der Handwerkzeugmaschine (100) für jeden Messwert (121) der Betriebsgröße (119); und
Berechnen (313) eines Rotationszeitpunkts (tᵣₒₜ) für jeden Messwert (121) der Betriebsgröße (119) unter Berücksichtigung einer zur Ausführung einer vollständigen Umdrehung des Motors (101) benötigten Zeitspanne und der Zeitstempel, wobei der Rotationszeitpunkt (tᵣₒₜ) einen Zeitpunkt definiert, an dem für einen Messwert (121) ausgehend von dem jeweiligen Zeitstempel eine komplette Umdrehung des Motors (101) abgeschlossen ist.

3. Verfahren (300) nach Anspruch 1 oder 2, wobei das Identifizieren (303) des Ereigniszeitpunkts (125) umfasst:
Empfangen (315) von Sensordaten, die den Betriebszustand (A, B, C) der Handwerkzeugmaschine (100) abbilden;
Ermitteln (317) des Ereigniszeitpunkts (125) innerhalb einer Zeitreihe (123) der Sensordaten;
Synchronisieren (319) der Zeitreihe (123) der Betriebsgröße (119) mit der Zeitreihe (123) der Sensordaten; und
Identifizieren (321) des Ereigniszeitpunkts (125) in der Zeitreihe (123) der Betriebsgröße (119) basierend auf dem Ereigniszeitpunkt (125) der Zeitreihe (123) der Sensordaten.

4. Verfahren (200) nach Anspruch 3, wobei die Sensordaten Daten eines externen Sensors (171), insbesondere eines Kamerasensors, sind.

5. Verfahren (400) zum Trainieren einer künstlichen Intelligenz (149) zum Ermitteln eines Betriebszustands (A, B, C) einer Handwerkzeugmaschine (100), umfassend:
Bereitstellen (401) eines gemäß dem Verfahren (300) nach einem der voranstehenden Ansprüche 1 bis 4 generierten Trainingsdatensatzes; und
Ausführen (403) eines Trainings der künstlichen Intelligenz (149) zum Ermitteln eines Betriebszustands (A, B, C) und/oder zum Vorhersagen eines Ereigniszeitpunkts (125, 126) einer Handwerkzeugmaschine (100) basierend auf dem Trainingsdatensatz.

6. Künstliche Intelligenz (149) zum Ermitteln eines Betriebszustands (A, B, C) einer Handwerkzeugmaschine (100) und/oder zum Vorhersagen eines Ereigniszeitpunkts (125, 126), wobei die künstliche Intelligenz (149) nach dem Verfahren (400) nach Anspruch 5 trainiert ist.

7. Künstliche Intelligenz (149) nach Anspruch 6, wobei die künstliche Intelligenz (149) als ein künstliches neuronales Netz, insbesondere als ein Netz mit wenigstens einer rekurrenten Schicht mit einem internen Zustandsspeicher, ausgebildet ist.

8. Recheneinheit (105), die eingerichtet ist, das Verfahren (300) zum Erzeugen eines Trainingsdatensatzes nach einem der voranstehenden Ansprüche 1 bis 4 und/oder das Verfahren (400) zum Trainieren einer künstlichen Intelligenz (149) nach Anspruch 5 und/oder die künstliche Intelligenz nach Anspruch 6 oder 7 auszuführen.

9. Computerprogrammprodukt (500) umfassend Befehle, die bei der Ausführung des Programms durch eine Datenverarbeitungseinheit diese veranlassen, das Verfahren (300) zum Erzeugen eines Trainingsdatensatzes nach einem der voranstehenden Ansprüche 1 bis 4 und/oder das Verfahren (400) zum Trainieren einer künstlichen Intelligenz (149) nach Anspruch 5 und/oder die künstliche Intelligenz nach Anspruch 6 oder 7 auszuführen.

10. Handwerkzeugmaschine (100) mit einer Recheneinheit (107) und wenigstens einem Sensor zum Ermitteln von Sensordaten wenigstens einer Betriebsgröße der Handwerkzeugmaschine (100), wobei die Recheneinheit ausgebildet ist, ein Verfahren (200) zum Steuern einer Handwerkzeugmaschine (100) auszuführen, wobei das Verfahren (200) umfasst:
Empfangen (201) von Sensordaten wenigstens einer Betriebsgröße (119) der Handwerkzeugmaschine (100);
Empfangen (203) eines auf einer Nutzereingabe eines Nutzers der Handwerkzeugmaschine (100) basierenden Eingabewerts für einen Steuerungsparameter der Handwerkzeugmaschine (100);
Ermitteln (205) eines ersten Zielwerts des Steuerungsparameters basierend auf den Sensordaten und dem Eingabewert;
Ausführen (207) eines Zustandsbestimmungsmoduls (107) und Anwenden des Zustandsbestimmungsmoduls (107) auf die Sensordaten und Ermitteln eines Betriebszustands (A, B, C) der Handwerkzeugmaschine (100);
Ermitteln (209) eines zweiten Zielwerts des Steuerungsparameters basierend auf dem ermittelten Betriebszustand (A, B, C) der Handwerkzeugmaschine (100);
Ermitteln (211) eines Ausgabezielwerts des Steuerungsparameters basierend auf dem ersten Zielwert und dem zweiten Zielwert; und
Ausgeben (213) des Ausgabezielwerts an eine Aktorik der Handwerkzeugmaschine (100) zum Steuern der Handwerkzeugmaschine (100).
